# EUROPÄISCHE PATENTSCHRIFT

(11) **EP 3 673 215 B1**
(45) Veröffentlichungstag und Bekanntmachung des Hinweises auf die Patenterteilung: **03.07.2024**
(21) Anmeldenummer: 18759282.9
(22) Anmeldetag: 21.08.2018
(51) Int. Cl.: F24D 11/02, F24D 19/10, F25B 5/04, F25B 5/02, F24F 5/00, F24F 11/65, F25B 41/385

(54) **BETRIEBSVERFAHREN FÜR EIN KÜHL- UND/ODER HEIZSYSTEM UND KÜHL- UND/ODER HEIZSYSTEM**
OPERATING METHOD FOR A COOLING AND / OR HEATING SYSTEM AND A COOLING AND / OR HEATING SYSTEM
PROCÉDÉS DE FONCTIONNEMENT D'UN SYSTÈME DE REFROIDISSEMENT ET / OU DE CHAUFFAGE ET UN SYSTÈME DE REFROIDISSEMENT ET / OU DE CHAUFFAGE

(30) Priorität: 22.08.2017 DE 102017214672
(43) Veröffentlichungstag der Anmeldung: 01.07.2020
(73) Patentinhaber: Hochschule für angewandte Wissenschaften München, 80335 München (DE)
(72) Erfinder: LOISTL, Felix, 81667 München (DE); KORTH, Timo, 85570 Markt Schwaben (DE); SCHWEIGLER, Christian, 82178 Puchheim (DE)
(74) Vertreter: Hoefer & Partner Patentanwälte mbB
(86) Internationale Anmeldenummer: PCT/EP2018/072515
(87) Internationale Veröffentlichungsnummer: WO 2019/038262

(56) Entgegenhaltungen:
- EP-A1- 2 574 740
- EP-A1- 2 767 773
- DE-A1- 3 240 353
- DE-A1-102007 054 429
- JP-A- S60 259 863

## Beschreibung

Die Erfindung betrifft ein Betriebsverfahren für ein Kühl- und/oder Heizsystem sowie ein Kühl- und/oder Heizsystem als solches.

In vielen technischen Anwendungen und insbesondere im Bereich des Klimatisierens, Kühlens und Heizens von Gebäuden oder Gebäudeteilen kommen Kühl- und/oder Heizsysteme auf der Basis von Wärmepumpen zum Einsatz. Diese Wärmepumpen weisen neben Wärmeübertragern zur Aufnahme und/oder zur Abgabe von Wärme aus der bzw. in die Umgebung auch Wärmeübertrager zur Temperierung der jeweiligen Zielbereiche auf. Zur Leistungssteigerung derartiger Kühl- und/oder Heizsysteme werden vermehrt auch thermische Speicher eingesetzt.

Nachteilig bei bekannten Konzepten für die Integration von Latentwärmespeicher in Kühl- und/oder Heizsystemen ist einerseits deren Einfluss auf die Druck- und/oder Temperaturlagen anderer Komponenten des jeweiligen Systems und andererseits die Notwendigkeit zusätzlicher Betriebskomponenten wie Umwälzpumpen, Kompressoren und dergleichen, deren Bereitstellung und Betrieb aufwendig sind und zusätzlich Energie benötigen.

Die EP 2 767 773 A1 und die JP S60 259 863 A offenbaren Kühl- und/oder Heizsysteme gemäß dem Oberbegriff des Anspruchs 1.

Es ist Aufgabe der vorliegenden Erfindung ein Betriebsverfahren für ein Kühl- und/oder Heizsystem mit thermischem Speicher sowie ein Kühl- und/oder Heizsystem als solches zu schaffen, mit welchen mit besonders einfachen Mitteln und bei möglichst geringem zusätzlichen apparativen und energetischen Aufwand ein besonders effektives Kühlen und/oder Heizen durchgeführt werden kann.

Die Lösung dieser Aufgabe erfolgt bei einem Betriebsverfahren für ein Kühl- und/oder Heizsystem erfindungsgemäß mit den Merkmalen des Anspruchs 3 und bei einem Kühl- und/oder Heizsystem als solchem erfindungsgemäß mit den Merkmalen des Anspruchs 1. Vorteilhafte Weiterbildungen sind Gegenstand der jeweiligen abhängigen Ansprüche.

Gemäß einem ersten Aspekt der vorliegenden Erfindung wird ein Betriebsverfahren für ein Kühl- und/oder Heizsystem mit einem Wärmepumpenkreislauf geschaffen, wobei ein Anlagenteil des Wärmepumpenkreislaufs insbesondere einerseits eingerichtet ist, Wärme und/oder Kälte zu speichern und/oder wieder abzugeben, und ferner ausgebildet ist mit (i) einer Wärmeübertrageranordnung mit mindestens zwei Wärmeübertragern und (ii) mit einem Wärmespeicher. Bei dem erfindungsgemäßen Betriebsverfahren wird in einem ersten Betriebsmodus zum Beladen des Wärmespeichers mit thermischer Energie der Wärmespeicher zu den Wärmeübertragern parallel geschaltet vom Wärmeübertragungsmedium durchströmt, insbesondere von einem Kältemittel. Ferner wird beim erfindungsgemäßen Betriebsverfahren in einem zweiten Betriebsmodus zum Entladen von thermischer Energie aus dem Wärmespeicher der Wärmespeicher zu den Wärmeübertragern seriell geschaltet vom Wärmeübertragungsmedium durchströmt, insbesondere von einem Kältemittel. Es ist somit ein Kernaspekt der vorliegenden Erfindung, den Wärmespeicher in Bezug auf mindestens zwei Wärmeübertrager zum Beladen mit thermischer Energie parallel und zum Entladen seriell geschaltet zu betreiben. Durch diese Maßnahmen kann das Betriebsverfahren mit besonders hoher Effizienz und bei besonders geringer Beeinflussung weiterer Komponenten des Wärmepumpenkreislaufs ausgeführt werden.

Vorangehend und nachfolgend werden im Sinne der vorliegenden Erfindung die Begriffe Kältemaschine, Kältemaschinenkreislauf, Kältemaschinensystem und Wärmepumpe, Wärmepumpenkreislauf bzw. Wärmepumpensystem synonym verwendet, sofern nichts Anderes gesagt ist. Im Allgemeinen wird auf entsprechende Aspekte einer Wärmepumpe als Oberbegriff Bezug genommen. Entsprechend werden auch die Begriffspaare Wärmespeicher/Kältespeicher, Kältemittel oder Wärmeübertragungsmedium und dergleichen synonym verwendet, sofern nichts Anderes gesagt ist. In der Wärmepumpentechnik und Kältetechnik wird für Heiz- und Kühlanwendungen der Begriff Kältemittel verwendet, oder allgemeiner Arbeitsmittel.

Alternativ oder zusätzlich kann die vorliegende Erfindung auch aufgefasst werden als ein Betriebsverfahren für ein Kühl- und/oder Heizsystem, bei welchem ein verwendetes Wärmeübertragungsmedium in Strömungsrichtung zuerst einen oder mehrere erste Wärmeübertrager, dann den einen oder mehrere Wärmespeicher und dann einen oder mehrere zweite Wärmeübertrager durchströmt.

Eine Nutzenergieübertragung, zum Beispiel eine Nutzenergieabgabe in Form von Wärme oder Kälte, über einen oder über mehrere erste und/oder zweite Wärmeübertrager kann durch serielle oder parallele Einbindung in einen externen oder sekundären Wärmeträgerstrom oder Fluidstrom erfolgen. Mögliche Anwendungen sind beispielsweise die Kühlung oder die Erwärmung von Raumluft oder die Kühlung oder die Erwärmung eines Heiz- oder Kühlkreislaufs mit Wasser oder wässriger Mischung als Wärmeträger.

Ein besonders hohes Maß an Zuverlässigkeit und Effizienz stellt sich bei dem erfindungsgemäßen Betriebsverfahren gemäß einer vorteilhaften Weiterbildung dann ein, wenn der Wärmespeicher derart direkt und/oder integriert betrieben wird, dass eine direkte Speicherung thermischer Energie auf einer Nutzseite des Kühl- und/oder Heizsystems erfolgt.

Das erfindungsgemäße Betriebsverfahren kann weitestgehend ohne apparative Modifikationen bei einem Kühl- und/oder Heizsystem angewandt und ausgeführt werden, wenn gemäß einer anderen vorteilhaften Weiterbildung der Wärmespeicher derart direkt und/oder integriert betrieben wird, dass der Betrieb des Kühl- und/oder Heizsystems weitestgehend ohne Beeinflussung einer Drucklage und/oder einer Temperaturlage, insbesondere in einem zu Grunde liegenden Verdampfungsprozess und/oder Kondensationsprozess und vorzugsweise in einem oder in mehreren Verdampfern und/oder einem oder in mehreren Kondensatoren der zu Grunde liegenden Wärmepumpenanordnung erfolgt. Auch für diese Aspekte sind die erfindungsgemäß vorgesehenen Umschaltmöglichkeiten zwischen seriellem und parallelem Betrieb notwendig.

Ein besonders geringes Maß an Beeinflussung anderer Teilprozesse beim Kühlen und/oder Heizen und insbesondere anderer Systemkomponenten des zu Grunde liegenden Kühl- und/oder Heizsystems stellt sich dann ein, wenn gemäß einer anderen vorteilhaften Ausgestaltungsform des erfindungsgemäßen Betriebsverfahrens der Wärmespeicher zur Speicherung thermischer Energie ohne oder weitestgehend ohne Temperaturänderung eines zu Grunde liegenden Speichermediums betrieben wird, vorzugsweise als Latentwärmespeicher und/oder unter Verwendung eines Phasenwechselmaterials.

Das erfindungsgemäße Betriebsverfahren ermöglicht sehr unterschiedliche Anwendungsformen.

So kann gemäß einer Ausführungsform das erfindungsgemäße Betriebsverfahren zum Kühlen und gemäß einer anderen Ausführungsform zum Heizen - insbesondere eines Gebäudes, Gebäudeteils und/oder eines oder mehrerer Räume - ausgeführt werden. Grundsätzlich kann das Verfahren so ausgeführt werden, dass beide Prozesse des Kühlens und des Heizens alternativ ausführbar sind.

Bei einem Kühlen kann eine Kältebevorratung erfolgen durch ein Verdampfen eines Wärmeübertragungsmediums als Kältemittel im Wärmespeicher. Bei einem anschließenden Kühlen kann eine Kälteentladung des Speichers durch ein Verdampfen eines Wärmeübertragungsmediums als Kältemittel im ersten als Kühlstelle wirkenden Wärmeübertrager erfolgen. Zur anschließenden nochmaligen Nutzung des erstmalig in der ersten Kühlstelle verdampften Wärmeübertragungsmediums wird dieses durch den Wärmespeicher geführt und durch Wärmeabgabe an ein zu Grunde liegendes kälteres Speichermedium im Wärmespeicher kondensiert. Nachfolgend wird das kondensierte und flüssige Wärmeübertragungsmedium - insbesondere bei einer gleichen Drucklage oder bei tieferer Drucklage, zum Beispiel durch Entspannung - erneut an einer Kühlstelle unter Aufnahme thermischer Energie verdampft, um diese zu kühlen. Je nach Betriebssituation und Anforderung ist es möglich, dass das Kältemittel in der ersten Kühlstelle nur teilweise verdampft. Dieser Mengenanteil des Kältemittels wird anschließend im Wärmespeicher kondensiert und dann zusammen mit dem in der ersten Kühlstelle nicht verdampften Mengenanteil zur zweiten Kühlstelle weitergeleitet. Die Regelung dieses Betriebsablaufs kann in diesem Fall mit einem Expansionsventil vor der ersten Kühlstelle erfolgen, welches als Regelgröße für die Regelung die Überhitzung des Kältemittels am Ausgang aus der zweiten Kühlstelle verwendet wird.

Alternativ oder zusätzlich kann es vorgesehen sein, dass bei einem Heizen eine Wärmebevorratung mit dem Wärmespeicher auf einem höheren Temperaturniveau durch Kühlen und/oder Kondensieren eines Wärmeübertragungsmediums oder Arbeitsmittels im Wärmespeicher erfolgt, wobei insbesondere für eine Wärmenutzung ein oder das Wärmeübertragungsmedium an einem als Heizstelle fungierenden Wärmetauscher kondensiert, anschließend, gegebenenfalls nach einer Teilentspannung, durch den Wärmespeicher geführt und dort durch Wärmeaufnahme aus oder von einem zu Grunde liegenden wärmeren Speichermedium verdampft wird und das verdampfte Wärmeübertragungsmedium zur Wärmeabgabe an einer zweiten Heizstelle kondensiert wird, um dort erneut Nutzwärme abzugeben. Je nach Betriebssituation und Anforderung ist es möglich, dass das Kältemittel auf dem Weg durch die in Reihe geschalteten Apparate, d.h. Wärmetauscher und Wärmespeicher, angestaut wird. Die Regelung der Nutzwärmeabgabe der gesamten Anordnung könnte durch Einstellung des aus der ersten oder zweiten Heizstelle austretenden Kältemittelflusses erfolgen, wobei als Regelgröße die Erfüllung der Heizaufgabe, beispielsweise erfasst durch die Temperatur des von der Anordnung beheizten Raumes, verwendet wird. Durch das Anstauen des Kältemittels verringert sich die Wärmeabgabe in der jeweiligen Heizstelle.

Besonders einfache und gleichwohl energiesparende Verhältnisse stellen sich ein, wenn das erfindungsgemäße Betriebsverfahren, welches - zumindest teilweise - ohne Betrieb von Anlagenkomponenten und/oder durch einen natürlichen Umlauf des Wärmeübertragungsmediums ausgeführt wird, insbesondere ohne den Betrieb eines Kompressors oder Verdichters des zu Grunde liegenden Kühl- und/oder Heizsystems.

Die Offenbarung betrifft ferner eine Steuereinheit für ein Kühl- und/oder Heizsystem, welche eingerichtet ist, den Betrieb eines Kühl- und/oder Heizsystems zu steuern, insbesondere indem eine Ausgestaltungsform des erfindungsgemäßen Betriebsverfahrens gesteuert ausgeführt wird und/oder deren Ausführung veranlasst wird.

Die vorliegende Erfindung schafft auch ein Kühl- und/oder Heizsystem als solches, welches einen Wärmepumpenkreislauf aufweist, dessen Anlagenteil, in dem insbesondere Wärme oder Kältegespeichert werden soll, ausgebildet ist (i) mit einer Wärmeübertrageranordnung mit mindestens zwei Wärmeübertragern und (ii) mit einem Wärmespeicher, und welches insbesondere zur Verwendung in oder mit einem erfindungsgemäßen Betriebsverfahren eingerichtet ist.

Ein alternativer oder zusätzlicher Aspekt des erfindungsgemäßen Kühl- und/oder Heizsystems ist die Ausgestaltung mit einer Steuereinheit, welche eingerichtet ist, den Betrieb eines Kühl- und/oder Heizsystems zu steuern, insbesondere indem eine Ausgestaltungsform des erfindungsgemäßen Betriebsverfahrens gesteuert ausgeführt und/oder deren Ausführung veranlasst wird.

Erfindungsgemäß der Wärmespeicher eingerichtet, in einem ersten Betriebsmodus zum Beladen des Wärmespeichers mit thermischer Energie zu den Wärmeübertragern parallel geschaltet vom Wärmeübertragungsmedium durchströmt zu werden. Bei Anwendung als Wärmespeicher findet die Beladung vorzugsweise durch Kondensation von Kältemitteldampf statt; bei Anwendung als Kältespeicher vorzugsweise durch Verdampfen von flüssigem Kältemittel.

Erfindungsgemäß ist der Wärmespeicher eingerichtet, in einem zweiten Betriebsmodus zum Entladen von thermischer Energie aus dem Wärmespeicher zu den Wärmeübertragern seriell geschaltet vom Wärmeübertragungsmedium durchströmt zu werden, insbesondere in einer Anordnung mit serieller Zwischenschaltung zwischen einem ersten Wärmeübertrager und einem zweiten Wärmeübertrager. Bei einer Anwendung als Wärmespeicher erfolgt die Entladung vorzugsweise durch Verdampfen von flüssigem Kältemittel, bei einer Anwendung als Kältespeicher vorzugsweise durch Kondensation von Kältemitteldampf.

Möglich ist auch die Verwendung von einer Gruppe parallel eingesetzter erster Wärmeübertrager und/oder einer Gruppe parallel eingesetzter zweiter Wärmeübertrager.

Bei einer anderen vorteilhaften Weiterbildung ist der Wärmepumpenkreislauf des Weiteren (iii) mit einer Wärmepumpenanordnung, welche insbesondere jeweils einen oder mehrere Verdichter, Kondensatoren und/oder Verdampfer aufweist, und (iv) mit einer Leitungsanordnung zur gesteuerten fluidmechanischen Verbindung von Komponenten des Wärmepumpenkreislaufs und/oder zum parallel und/oder seriell geschalteten Durchströmen des Wärmespeichers mit dem Wärmeübertragungsmedium ausgebildet.

Es bieten sich unterschiedliche konstruktive Ausgestaltungsformen des Kühl- und/oder Heizsystems zur Realisierung des alternativen und - in Bezug auf vorgesehene Wärmeübertrager - seriellen und parallelen Durchströmens des Wärmespeichers mit dem Wärmeübertragungsmedium an.

Es stellen sich jedoch besonders einfache Verhältnisse ein, wenn ein jeweiliger Wärmeübertrager und insbesondere jeder Wärmeübertrager sowie der Wärmespeicher eingangsseitig und/oder in einer Fließrichtung des Wärmeübertragungsmediums stromaufwärts gelegen jeweils eine erste Ventileinrichtung aufweisen.

Zusätzlich oder alternativ ist es von besonderem Vorteil, wenn ein jeweiliger Wärmeübertrager und insbesondere jeder Wärmeübertrager sowie der Wärmespeicher ausgangsseitig und/oder in einer Fließrichtung des Wärmeübertragungsmediums stromabwärts gelegen jeweils eine zweite Ventileinrichtung aufweisen.

Erfindungsgemäß ist eine jeweilige erste Ventileinrichtung als Absperrventil und/oder als - insbesondere elektronisches - Expansionsventil ausgebildet, eine jeweilige zweite Ventileinrichtung als Umschaltventil und/oder als Dreiwegeventil und/oder als Kombination mit oder aus zwei Durchgangsventilen zur Umschaltung ausgebildet ist, die Leitungsanordnung eine erste serielle Rückführleitung aufweist für eine steuerbare fluidmechanische Verbindung zwischen der zweiten Ventileinrichtung eines ersten Wärmeübertragers und einem Anschlussknoten in einer Leitung zwischen der ersten Ventileinrichtung des Wärmespeichers und dem Wärmespeicher und/oder die Leitungsanordnung eine zweite serielle Rückführleitung aufweist für eine steuerbare fluidmechanische Verbindung zwischen der zweiten Ventileinrichtung des Wärmespeichers und einem Anschlussknoten in einer Leitung zwischen der ersten Ventileinrichtung eines zweiten Wärmeübertragers und dem zweiten Wärmeübertrager.

Weitere Einzelheiten, Vorteile und Merkmale der vorliegenden Erfindung ergeben sich aus nachfolgender Beschreibung von Ausführungsbeispielen anhand der Zeichnung.
- Figuren 1 bis 3: zeigen schematisch die hydromechanische Verschaltung der Komponenten einer ersten Ausführungsform des erfindungsgemäßen Kühl- und/oder Heizsystems.
- Figuren 4 und 5: zeigen schematisch in Form von Graphen verschiedene Zustände und Temperaturlagen, die bei verschiedenen Betriebszuständen des erfindungsgemäßen Verfahrens eingenommen werden.
- Figur 6: zeigt nach Art eines Ersatzschaltbildes die strikte Parallelschaltung bei der Ausführungsform des erfindungsgemäßen Kühl- und/oder Heizsystems aus Figur 1.
- Figur 7: zeigt nach Art eines Zustandsdiagramms verschiedene Zustände, die sich mit der Parallelschaltung gemäß Figur 6 erfindungsgemäß beim Betriebsverfahren einstellen können.
- Figur 8: gibt die bei der Parallelschaltung gemäß Figur 6 auftretenden Temperaturlagen wieder.
- Figuren 9 bis 12: zeigen herkömmliche Ausführungsformen von Kühl- und/oder Heizsystemen mit entsprechenden Zustandsdiagrammen.
- Figuren 13 bis 15: beschreiben den Heatpipe-Betrieb einer Ausführungsform des erfindungsgemäßen Kühl- und/oder Heizsystems.

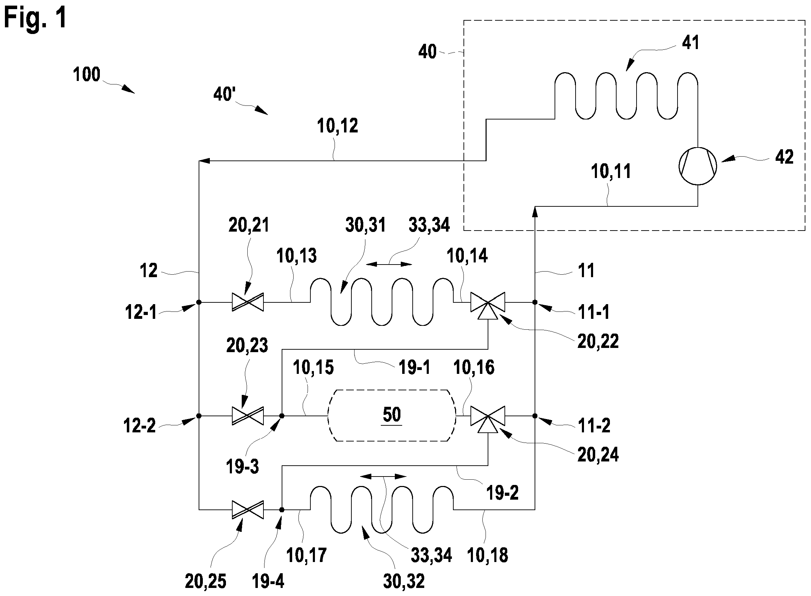

Nachfolgend werden unter Bezugnahme auf die Figuren 1 bis 15 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Die Figuren 1 bis 3 zeigen schematisch die hydromechanische Verschaltung der Komponenten einer ersten Ausführungsform des erfindungsgemäßen Kühl- und/oder Heizsystems 100.

Zunächst gibt Figur 1 einen generellen Überblick über die allgemeine Struktur des erfindungsgemäßen Kühl- und/oder Heizsystems 100, welches im Kern gebildet wird von einem Wärmepumpenkreislauf 40`, der auch als Wärmepumpensystem aufgefasst werden kann und auch den Fall eines Kältemaschinenkreislaufs oder Kältemaschinensystems abdecken soll. Kernbestandteil des Wärmepumpenkreislaufs 40' ist die Wärmepumpenanordnung 40, die auch als Kältemaschinenanordnung aufgefasst werden kann, und einen Verdichter oder Kompressor 42 und einen Kondensator 41 zum Komprimieren eines zu Grunde liegenden Wärmeübertragungsmediums - aufgefasst als Kältemittel - bzw. zum Kondensieren desselben aufweist. Alternativ kann in der Sichtweise als Wärmekraftmaschine von dem Vorhandensein eines Expanders und entsprechend eines Verdampfers ausgegangen werden.

Wärmepumpe und Kältemaschine können auch als linksläufige Prozesse aufgefasst werden, mit einem Verdichter als Kompressor und einem Expansionsorgan.

Die Erfindung ist gleichermaßen anwendbar für Wärmekraftmaschinen mit entsprechenden rechtsläufigen Prozessen mit Druckerhöhung in der flüssigen Phase, z.B. mittels einer Pumpe, und mit einer Expansionsmaschine zur Abgabe mechanischer Arbeit bei der Entspannung des gasförmigen Kältemittels.

Weitere Komponenten des Wärmepumpenkreislaufs 40' sind eine Wärmeübertrageranordnung 30 mit einem ersten Wärmeübertrager 31 und einem zweiten Wärmeübertrager 32, ein Wärme- und/oder Kältespeicher 50 sowie eine entsprechende Leitungsanordnung 10 mit verschiedenen Leitungen zur gesteuerten fluidmechanischen Verbindung der Komponenten des Wärmepumpenkreislaufs 40' miteinander. Zur Steuerung ist eine Ventilanordnung 20 mit einer Mehrzahl von Ventilen oder Ventileinrichtungen 21 bis 25 - gegebenenfalls in verschiedener Ausführungsform, zum Beispiel als Expansionsventil und/oder als Umschaltventil - in den Leitungen der Leitungsanordnung 10 eingebracht und gegebenenfalls über eine hier nicht grafisch dargestellte Steuereinheit steuerbar.

Über eine zuführende und in Bezug auf die Strömungsrichtung des Wärmeübertragungsmediums bezüglich der Wärmepumpenanordnung 40 stromaufwärts gelegene Saugasleitung 11 und eine abführende und in Bezug auf die Strömungsrichtung des Wärmeübertragungsmediums bezüglich der Wärmepumpenanordnung 40 stromabwärts gelegene Flüssiggasleitung 12 der Leitungsanordnung 10 ist die Wärmepumpenanordnung 40 mit den in Reihe geschalteten Komponenten Kondensator 41 und Verdichter 42 an die Anordnung aus erstem Wärmeübertrager 31, zweitem Wärmeübertrager 32 und Wärmespeicher 50 fluidmechanisch angebunden.

Der erste Wärmeübertrager 31 ist über Teilleitungen 13 und 14 der Leitungsanordnung 10 an Anschlussknoten 12-1 und 11-1 an die Flüssiggasleitung 12 bzw. an die Sauggasleitung 11 fluidmechanisch parallel angeschlossen. Die Teilleitung 13 liegt in Bezug auf den ersten Wärmeübertrager 31 stromaufwärts, die Teilleitung 14 dagegen stromabwärts. In der zuführenden Teilleitung 13 und in Strömungsrichtung des Wärmeübertragungsmediums dem Anschlussknoten 12-1 nachgeschaltet ist eine erste Ventileinrichtung 21 des ersten Wärmeübertragers 31 als Teil einer Ventilanordnung 20, insbesondere in Form eines elektronischen Expansionsventils, ausgebildet. In der abführenden Leitung 14 und in Strömungsrichtung vor dem Anschlussknoten 11-1 gelegen ist eine zweite Ventileinrichtung 22 des ersten Wärmeübertragers 31 ausgebildet, insbesondere nach Art eines Umschaltventils oder eines Dreiwegeventils. Die Umschaltung kann auch durch zwei Durchgangsventile bewerkstelligt werden, die parallel in der abführenden Leitung 14 nach Abzweig der Rückführleitung 19-1 und der ersten Rückführleitung 19-1 eingesetzt werden

Parallel dazu ist der Wärmespeicher 50 über Teilleitungen 15 und 16 und über Anschlussknoten 12-2 und 11-2 fluidmechanisch an die Flüssiggasleitung 12 bzw. an die Sauggasleitung 11 fluidmechanisch angeschlossen. In der zuführenden Teilleitung 15 der Leitungsanordnung 10 ist in Strömungsrichtung des Wärmeübertragungsfluids oder - mediums dem Anschlussknoten 12-2 nachgeschaltet eine erste Ventileinrichtung 23 des Wärmespeichers 50 als Teil der Ventilanordnung 20 ausgebildet, insbesondere als elektronisches Expansionsventil. In der abführenden Teilleitung 16 und in Bezug auf die Strömungsrichtung des Wärmeübertragungsfluids stromaufwärts vom Anschlussknoten 11-2 ist eine zweite Ventileinrichtung 24 des Wärmespeichers 50 ausgebildet, vorzugsweise wiederum als Umschaltventil oder als Dreiwegeventil oder als Parallelschaltung von zwei Durchgangsventilen in der abführenden Leitung 16 und parallel dazu in der zweiten Rückführleitung 19-2.

Weiterhin parallel angeschlossen an die Fluidgasleitung 12 und an die Sauggasleitung 11 ist - über eine stromaufwärts und zuführende Teilleitung 17 und eine stromabwärts gelegene und abführende Teilleitung 18 der Leitungsanordnung 10 - ein zweiter Wärmeübertrager 32 der Wärmeübertrageranordnung 30. In der zuführenden Teilleitung 17 ist dem Anschlussknoten 12-2 in Strömungsrichtung des Wärmeübertragungsmediums nachgeschaltet ein erstes Ventil 25 des zweiten Wärmeübertragers 32 ausgebildet, insbesondere nach Art eines elektronischen Expansionsventils.

Erfindungsgemäß sind bei dem Kühl- und/oder Heizsystem 100 erste und zweite serielle Rückführleitungen 19-1 und 19-2 ausgebildet. Die erste serielle Rückführleitung 19-1 ermöglicht eine steuerbare fluidmechanische Verbindung zwischen der zweiten Ventileinrichtung 22 des ersten Wärmeübertragers 31 und einem Anschlussknoten 19-3 in der zuführenden Teilleitung 15 zwischen der ersten Ventileinrichtung 23 des Wärmespeichers 50 und dem Wärmespeicher 50. Die zweite serielle Rückführleitung 19-2 ermöglicht eine steuerbare fluidmechanische Verbindung zwischen der zweiten Ventileinrichtung 24 des Wärmespeichers 50 und einem Anschlussknoten 19-4 in der zuführenden Teilleitung 17 zwischen der ersten Ventileinrichtung 25 des zweiten Wärmeübertragers 32 und dem zweiten Wärmeübertrager 32.

Durch eine entsprechende Beschaltung der ersten Ventileinrichtungen 21, 23, 25 und zweiten Ventileinrichtungen 22, 24 kann erfindungsgemäß entweder eine fluidmechanisch strikt parallele Verschaltung des ersten Wärmeübertragers 31, des Wärmespeichers 50 und des zweiten Wärmeübertragers 32 in Bezug auf die Flüssigkeitsleitung 12 und die Sauggasleitung 11 oder aber eine fluidmechanisch strikt serielle Verschaltung des ersten Wärmeübertragers 31, des Wärmespeichers 50 und des zweiten Wärmeübertragers 32 in dieser Reihenfolge in Bezug auf die Strömungsrichtung des Wärmeübertragungsmediums erreicht werden, um so die erfindungsgemäßen Vorteile zu generieren.

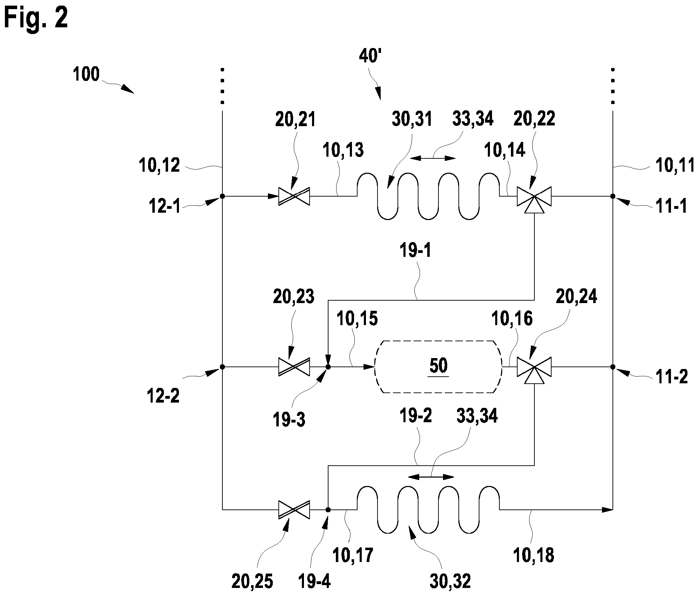

Figur 2 zeigt diese Aspekte in Hervorhebung.

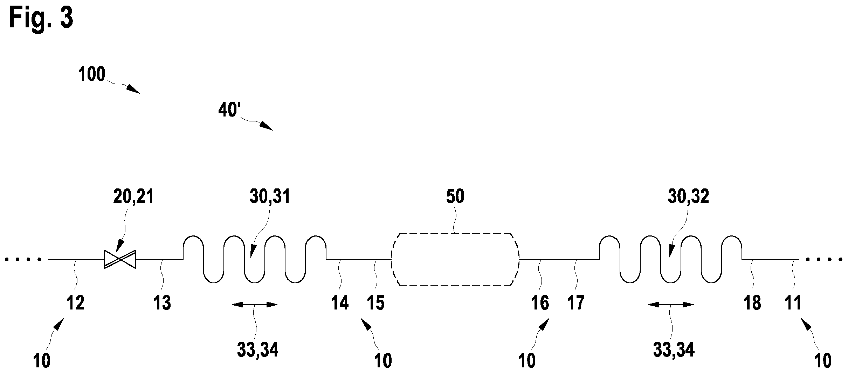

Figur 3 stellt in vereinfachter Form die serielle Verschaltung des ersten Wärmeübertragers 31, des Wärmespeichers 50 und des zweiten Wärmeübertragers 32 dar.

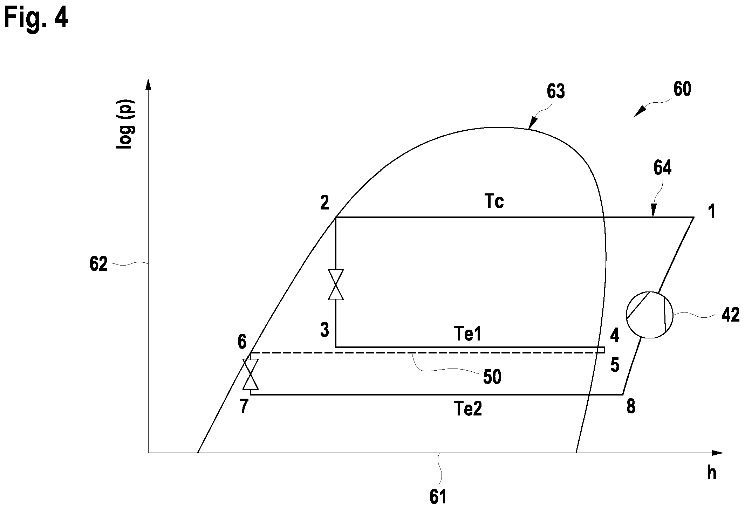

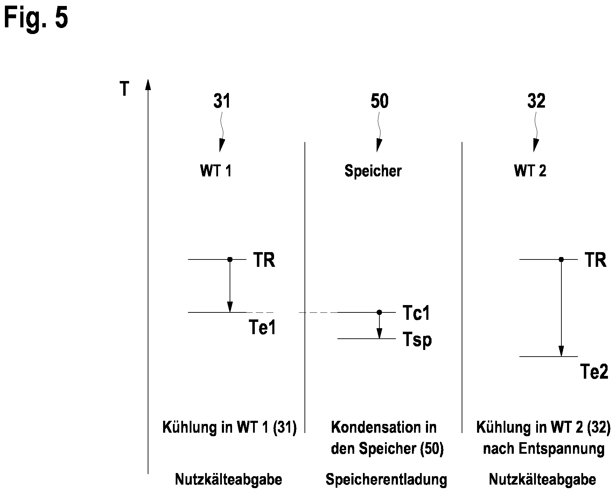

Die Figuren 4 und 5 zeigen schematisch in Form von Graphen verschiedene Zustände 1 bis 8 und Temperaturlagen TR, Te1, Te2, Tc, TSp, die bei verschiedenen Betriebszuständen des erfindungsgemäßen Verfahrens und insbesondere unter Verwendung der in den Figuren 1 bis 3 gezeigten Ausführungsform des erfindungsgemäßen Kühl- und/oder Heizsystems 100 eingenommen werden. Diese Aspekte werden in einem späteren Abschnitt noch im Detail weiter erläutert. Im Graphen 60 der Figur 4 ist auf der Abszisse 61 die Enthalpie h und auf der Ordinate 62 der Logarithmus log(p) des Drucks p aufgetragen. Die Spur 63 stellt die Phasengrenzlinie dar. Sie umschreibt das Zweiphasengebiet und trennt den Bereich flüssiger Kältemittelzustände (links) von den gasförmigen Zuständen (rechts). Die Spur 64 zeigt den Zustandsverlauf oder die Abfolge im Prozess mit den Zuständen 1 bis 8 und den entsprechenden Temperaturlagen Tc, Te1 und Te2.

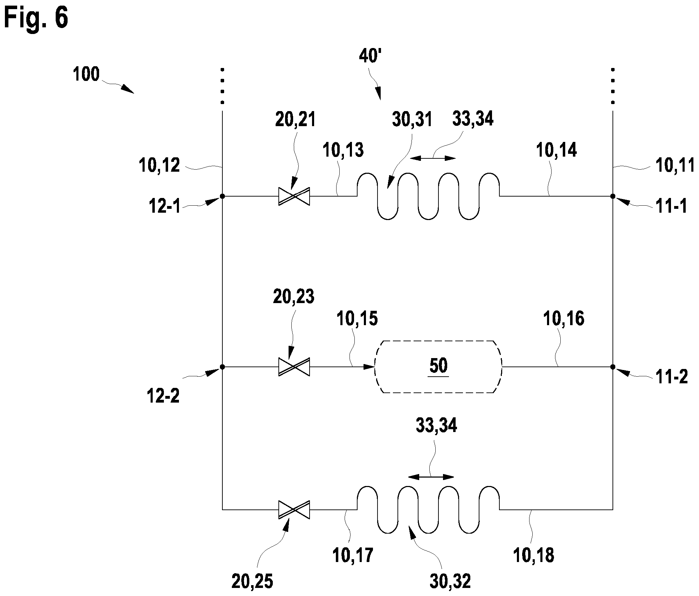

Figur 6 zeigt - insbesondere im Vergleich zu der Darstellung aus Figur 3 mit der seriellen Verschaltung - nach Art eines Ersatzschaltbildes die strikte Parallelschaltung bei der Ausführungsform des erfindungsgemäßen Kühl- und/oder Heizsystems 100 aus Figur 1.

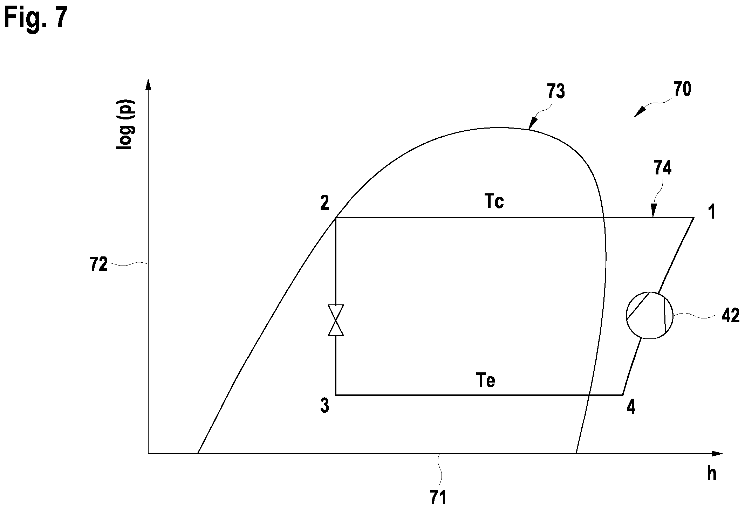

Figur 7 zeigt nach Art eines Zustandsdiagramms verschiedene Zustände 1 bis 4, die sich mit der Parallelschaltung gemäß Figur 6 erfindungsgemäß beim Betriebsverfahren einstellen können, wobei die relevanten Temperaturlagen mit Te und Tc bezeichnet sind und in einem späteren Abschnitt weiter erläutert werden. Im Graphen 70 der Figur 7 sind auf der Abszisse 71 die Enthalpie h und auf der Ordinate 72 der Logarithmus log(p) des Drucks p aufgetragen. Die Spur 73 zeigt die Phasengrenzlinie. Die Spur 74 zeigt den Zustandsverlauf im Prozess mit der Abfolge der Zustände 1 bis 4.

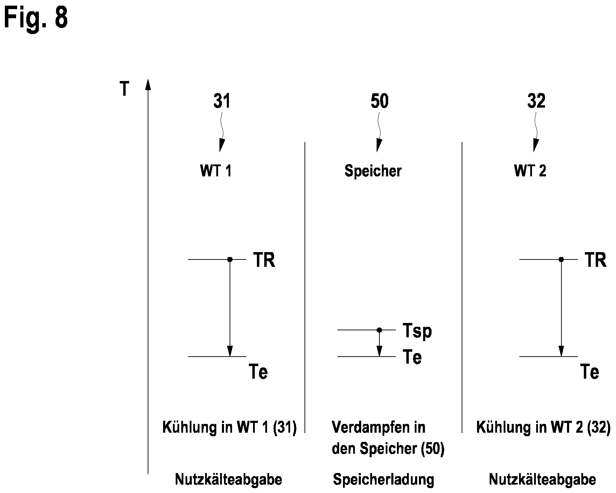

Figur 8 gibt die bei der Parallelschaltung gemäß Figur 6 auftretenden Temperaturlagen wieder, wobei die Temperaturen Te, TR, TSp zum Tragen kommen.

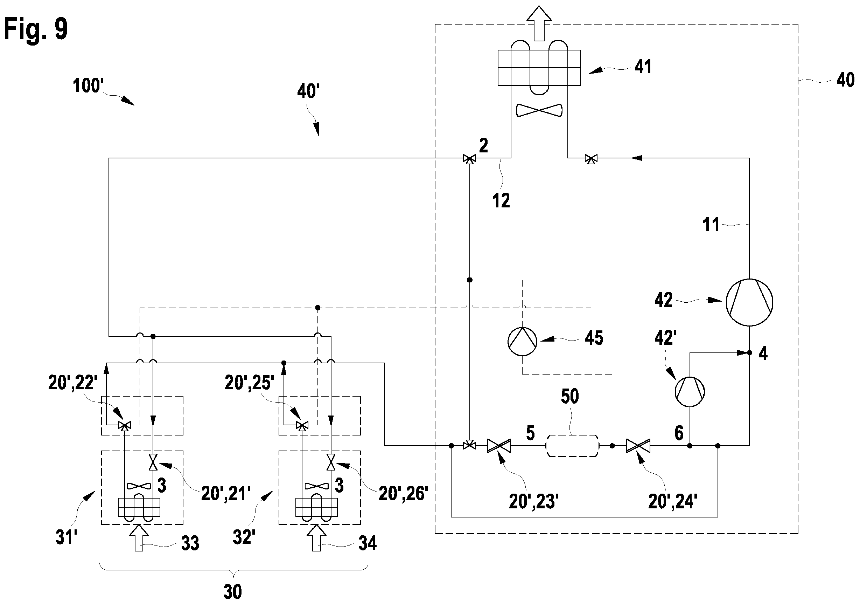

Die Figuren 9 bis 12 zeigen herkömmliche Ausführungsformen von Kühl- und/oder Heizsystemen 100' mit entsprechenden Zustandsdiagrammen. Bei diesen Ausführungsformen von Kühl- und/oder Heizsystemen 100' mit Wärme- und Kältespeicher werden - im Gegensatz zur vorliegenden Erfindung - ein zweiter Kompressor 42` und/oder eine Umwälzpumpe 45 eingesetzt. Details dazu werden in einem folgenden Abschnitt wiedergegeben.

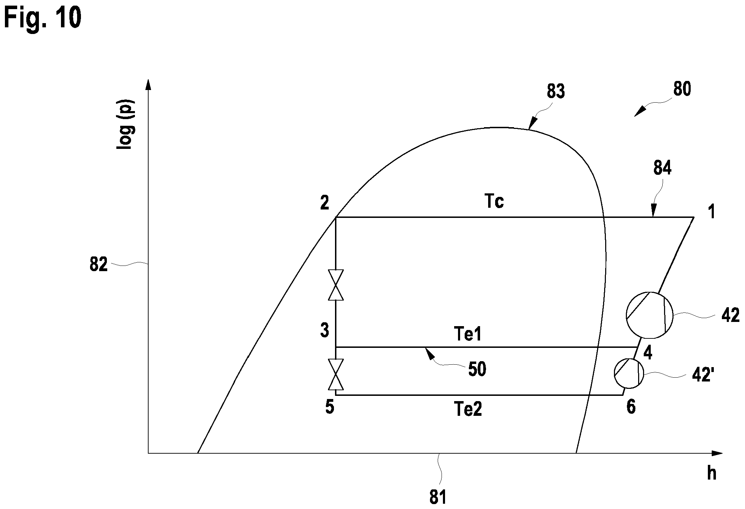

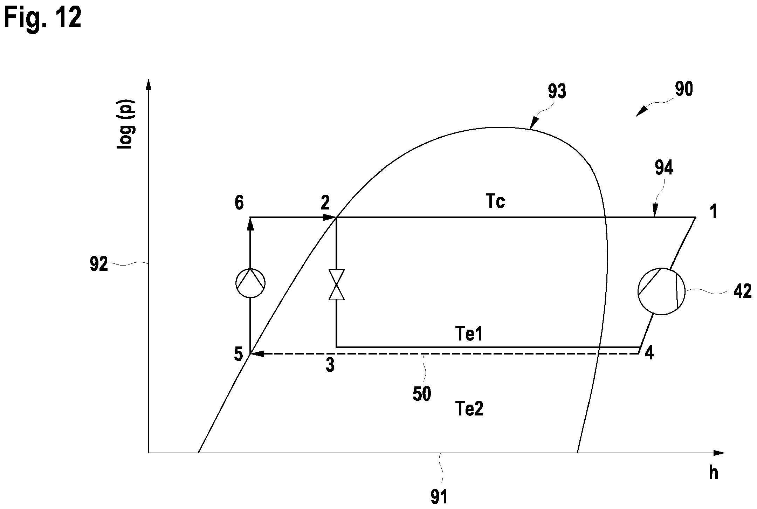

Die Graphen 80 und 90 der Figuren 10 bzw. 12 zeigen auf den Abszissen 81 und 91 die Enthalpie h und auf den Ordinaten 82 bzw. 92 den Logarithmus log(p) des Drucks p mit Spuren 83 bzw. 93 zur Darstellung der Phasengrenzlinie und mit Spuren 84 bzw. 94 für den Verlauf der Zustandsänderungen mit der Abfolge der Zustände 1 bis 6 und mit den entsprechenden Temperaturlagen Tc, Te1, Te2.

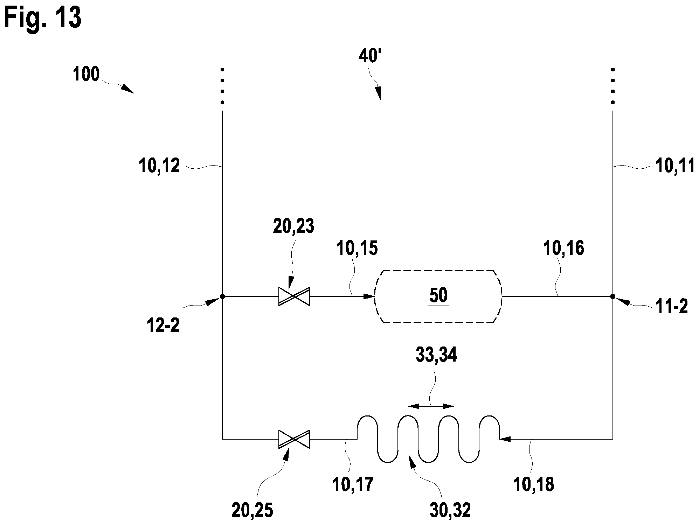

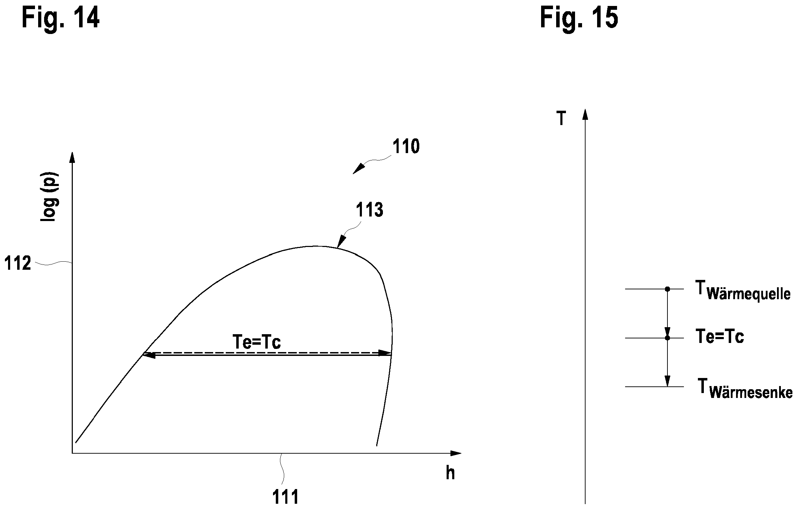

Die Figuren 13 bis 15 beschreiben den Heatpipe-Betrieb einer Ausführungsform des erfindungsgemäßen Kühl- und/oder Heizsystems 100, wobei die Figur 14 mit dem Graphen 110 mit auf der Ordinate 111 aufgetragener Enthalpie h und auf der Abszisse 112 aufgetragenem Logarithmus log(p) des Drucks p eine Spur 113 zur Darstellung der Phasengrenzlinie sowie die Temperaturlagen Te und Tc zeigt, welche in Figur 15 in Relation zueinander weiter erläutert werden. Der Heatpipe-Betrieb ist eine alternative Entladungsmöglichkeit des Speichers anstelle einer seriellen Entladung. Nach einer parallelen Beladung könnte eine Heatpipe-Entladung - insbesondere abgegrenzt vom restlichen Wärmepumpensystem - erfolgen.

Diese und weitere Aspekte der vorliegenden Erfindung werden auch anhand der folgenden Darstellung weiter erläutert:
Mit der vorliegenden Erfindung wird unter anderem ein neues Schaltungskonzept für einen thermischen Speicher in einem internen Kreislauf einer Kältemaschine oder allgemein in einem internen Kreislauf einer Wärmepumpe für die Aufnahme und Zwischenspeicherung thermischer Energie vorgestellt.

Durch das Einbringen eines thermischen Speichers wird eine Entkopplung von Energieerzeugung und Energieverbrauch erreicht und der Anlagenbetrieb wird optimiert.

Es wird folgende neuartige grundlegende Prozessführung vorgeschlagen, hier beschrieben für den Fall der Kältespeicherung auf der kalten Seite des Wärmepumpenkreislaufs, analog ist die Prozessführung auch für die Wärmespeicherung auf der warmen Seite des Wärmepumpenkreislaufs anwendbar: Durch die direkte Integration von thermischen Speichern in den Wärmepumpenkreislauf lässt sich das an einer Kühlstelle verdampfte Kältemittel in einem nachgeschalteten Speicher kondensieren und anschließend in flüssiger Form erneut als Kältemittel in einer Kühlstelle verwenden. Die Beladung und Entladung des Speichers erfolgt dabei durch eine Umschaltung von einem parallelen Betrieb für die Kältebevorratung in einen Betrieb in Reihe bei der Kältenutzung. Analog kann eine Wärmespeicherung auf hohem Temperaturniveau geschehen.

Bei dem thermischen Speicher handelt es sich vorzugsweise um einen Latentwärmespeicher, der durch die Ausnutzung des Phasenwechsels eines Materials bei nahezu konstanter Temperatur Energie aufnehmen kann. Ein Latentwärmespeicher kommt durch die annähernd konstante Temperatur bei der Energiespeicherung zusätzlich dem Betriebsverhalten einer Kompressionskältemaschine entgegen. Die Ziele der Energiespeicherung können sein: Effiziente Nutzung von regenerativ erzeugtem Strom, verstärkte Verwendung günstigerer Stromtarife, Nutzung von Nachtstrom, Nutzung von günstigeren Betriebsbedingungen (z.B. günstigere Außentemperaturen für die Abwärmeabfuhr einer Kältemaschine oder für die Aufnahme von Umgebungswärme für eine Wärmepumpe) oder die Zwischenspeicherung von anfallenden Energieströmen etc.

Die Neuerung dieser Erfindung bezieht sich auf im Kältekreis integrierte thermische Speicher. Das Schaltungskonzept sieht die Integration eines Speichers in einen Kältemaschinenkreislauf vor, der für die thermische Energiebevorratung alleinig oder parallel im Verbund zu oder mit weiteren Wärmeübertragern beladen wird. Für die thermische Energieausspeicherung wird der Speicher durch eine serielle Verschaltung mit einem oder mit mehreren Wärmeübertragern entladen.

Wärmepumpenheizsysteme und Wärmepumpenkühlsysteme werden nach dem derzeitigen Stand der Technik sowohl zur Beheizung als auch zur Kühlung von Gebäuden eingesetzt. Die Hauptkomponenten aller auf dem Kaltdampfprozess basierender Systeme sind Verdampfer, Kompressor, Kondensator und Expansionsventil. Es gibt unterschiedliche Ausführungen, u.a. wasserbasierte und luftbasierte Systeme. Luftbasierte Systeme wie Mono- und Multi-Split-Anlagen sowie VRF-Systeme sind direktverdampfende Klimatisierungssysteme, bei denen die Wärmeaufnahme und Wärmeabgabe über die Luft erfolgt.

Wärmepumpen bzw. Kältemaschinen gelten als effiziente und klimaschonende Variante der Klimatisierung. Um die Energie, z.B. aus erneuerbaren Ressourcen, noch effizienter zu nutzen, wird der Einsatz verschiedener Energiespeicher untersucht und umgesetzt. Neben der direkten Speicherung des elektrischen Stroms mittels Batterien ist auch die Speicherung von thermischer Energie im Fokus der Entwicklungen.

Thermische Speicher können unterschieden werden in: Thermochemische Speicher, Latentwärmespeicher und thermische Speicher, die sensible Wärme speichern. Als fühlbare oder sensible Wärme bezeichnet man Wärme bzw. thermische Energie, die bei Übertragung auf einen Körper (Zufuhr oder Abfuhr) unmittelbar mit einer Änderung der Temperatur des Körpers einhergeht. Vielfältige Einsatzgebiete ergeben sich beispielsweise für die Speicherung von Wärme oder Kälte für Wohn- und Bürogebäude oder die Speicherung von Wärme aus industriellen Prozessen. Insbesondere Latentwärmespeicher bieten durch den Einsatz von Phasenwechselmaterialien (PCM, phase change material) den Vorteil, Energie auf einem nahezu konstanten Temperaturniveau zu speichern. Im Vergleich zu der Wärmespeicherung, die von einer Temperaturveränderung des Mediums und deren Wärmekapazität abhängig ist (sensible Wärme), nutzen PCMs die latente Energie des Phasenwechsels aus. Bei der Wahl eines PCMs auf geeignetem Temperaturniveau können so in dem gleichen Volumen wesentlich höhere Energiedichten erreicht werden als beispielsweise bei Wärmespeichern mit Wasserfüllung als Speichermedium, insbesondere wenn der Einsatz einer Wärmepumpe einen Betrieb mit geringen Temperaturunterschieden erfordert.

Für den Antrieb von Kompressionskältemaschinen wird elektrische Energie benötigt, die dem Verdichter zugeführt wird. Der Verdichter arbeitet zwischen zwei Drucklagen, dem Verdampfungsdruck für die Wärmeaufnahme und dem Kondensationsdruck für die Wärmeabgabe. Beide Drucklagen hängen maßgeblich von den Raum- und Umgebungstemperaturen ab.

Folgende Aspekte sprechen für den Einsatz von Wärmespeichern in luftbasierten Klimatisierungssystemen:
- Betrachtet man das Aufkommen regenerativen Stroms, unterliegt dieser einer stetigen Fluktuation. Besonders in Hinblick auf einen erweiterten Ausbau der Nutzung erneuerbarer Energien ist eine Zwischenspeicherung von Energie zur Überbrückung der Zeiten ohne regenerative Stromgewinne notwendig.
- Gleichbedeutend kann der Speicherbedarf auch für die Ausnutzung günstigerer Stromtarife gesehen werden.
- Unter dem Aspekt der Anlageneffizienz können mit einer Speicherung günstigere Betriebsbedingungen für den Kompressionskälteprozess gewählt werden, wie das Betreiben einer Wärmepumpe zu den wärmeren Tageszeiten oder das Erzeugen von Kälte bei niedrigeren Außentemperaturen.
- Ein Speicher erlaubt weiterhin bisher ungenutzte Energieströme zu verwenden. Bei einem Kompressionskälteprozess fallen immer gekoppelt Wärme und Kälte an. Die thermischen Energien könnten im Hinblick auf einen späteren Bedarf in einem Speicher bevorratet werden, anstatt diese bei Kühlbedarf an die Umgebung abzugeben oder bei Heizbedarf von der Umgebung aufzunehmen.

Essentiell für die Verwendung eines Speichers ist eine effiziente Ein- und Auskopplung der thermischen Energie. Konventionelle und als Kaltwassersätze ausgeführte Kältemaschinen können dies über einen Wasserspeicher verwirklichen. In Luft-Luft-Wärmepumpsystemen kann das Wärmetransportmedium Luft, durch die niedrige spezifische Speicherkapazität und die geringe Dichte im Vergleich zu Wasser, als Speichermedium nur sehr begrenzt genutzt werden.

Ein Latentwärmespeicher außerhalb des Kältekreises in den Luftkanal hinter dem Verdampfer zu installieren, wird in aktuellen Forschungsprojekten untersucht. Dies zielt darauf ab, den Energieverbrauch zur Kühlung zu verringern sowie die Kälteversorgung des Kühlgutes zu stabilisieren. Ein speziell angepasster Wärmeübertrager mit vergrößerter Oberfläche ermöglicht den Wärmeaustausch zwischen der Luft und dem PCM. Der Energieübertrag auf den Latentwärmespeicher erfolgt also nicht unmittelbar durch Wärmeaustausch mit dem internen Kältemaschinenkreislauf sondern indirekt über einen Luftstrom. Nachteilig für die Energieeffizienz ist dabei der zweistufige Wärmeübertrag vom Speichermedium über das Wärmeträgermedium Luft an das Kältemittel des internen Kältemaschinenkreislaufs.

Alternativ kann eine Ein- und Ausspeicherung über den Kältekreis erfolgen. Gegenüber der Verwendung eines Luftstroms ist der Energietransport bei Kältemittel durch die weitaus höhere Energiedichte mit wesentlich geringeren Volumenströmen zu verwirklichen. Diese Direktspeicherung im Kältekreis kommt bisher nur in vereinzelten Systemen vor, die nachfolgend kurz aufgelistet werden:
- Die aktive Wärmebevorratung mittels PCM-Speicher zum Abtauen des mit Außenluft beaufschlagten Verdampfers im Außengerät wird bereits in marktverfügbaren Systemen im Wärmepumpenheizbetrieb praktiziert. Ein Abtauprozess ist notwendig, da es bei geringen Außentemperaturen in Kombination mit einer hohen relativen Luftfeuchte dazu kommen kann, dass eine Vereisung des außenluft-beaufschlagten Verdampfers der Luft/Wasser-Wärmepumpe auftritt. Als Vorhaltung für den Abtauvorgang wird komprimiertes Heißgas gezielt in einem Latentwärmespeicher kondensiert. Die anfallende Wärmeenergie wird gespeichert und kann bei Bedarf, auch im regulären Betrieb, als Wärmequelle zum Abtauen des Verdampfers verwendet werden.
- Eisspeicher werden in einem Kältekreis eingesetzt, um eine Unterkühlung des Kondensats zu realisieren. Bei diesem Konzept wird nachts ein Eisspeicher über das Klimasystem gefroren. Tagsüber wird dieser Eisspeicher hinzugezogen, um an dem Kältemittelkondensat eine starke Unterkühlung zu vollziehen. Dies ergibt eine erhöhte Kälteleistung nach der Entspannung des Kondensats bei unveränderter Leistungsaufnahme des Verdichters. Der Gewinn an Kälteleistung beruht auf der Bevorratung von Kälteenergie während der Nachtstunden.

Für die thermische Speicherung von Nutzwärme oder Nutzkälte direkt in einem Kältekreis für eine Verwendung zur Klimatisierung, ohne einen erheblichen anlagentechnischen Mehraufwand, gibt es aktuell keine Lösungen. Bei den bisherigen vorkommenden Technologien liegt keine direkte Speicherung auf der Nutzseite vor. Zwar werden durch günstigere Betriebsbedingungen Prozesse verbessert, aber Nutzenergie wird nicht direkt gespeichert. Bei einigen Anwendungen findet eine Aktivierung über einen zwischengeschalteten Wärmeträgerkreislauf statt. Dies ist jedoch infolge der für die Wärmeübertragung erforderlichen Temperaturdifferenz zwangsläufig mit zusätzlichen exergetischen Verlusten verbunden.

Gegenstand der hier vorliegenden Erfindung ist insbesondere ein neuartiges Schaltungskonzept, das es ermöglicht thermische Speicher 50 - vorzugsweise mit Phasenwechselmaterialien - in Wärmepumpensysteme 100 zu integrieren und diese durch die spezielle Umschaltung zwischen parallelem und seriellem Betrieb zum Beladen bzw. zum Entladen als Wärme- oder Kältespeicher zu nutzen. Durch diese Verschaltung mit direkter Integration des Speichers 50 in den Kältekreislauf 40' kann Nutzenergie gespeichert und bei Bedarf abgerufen werden, und zwar ohne oder ohne wesentliche Änderung der apparativen Ausstattung des Wärmepumpenkreislaufs 40' oder ohne negativen Einfluss auf die Betriebsparameter, in erster Linie auf die Temperaturniveaus von Verdampfungs- und/oder von Kondensationsprozessen.

Es können sämtliche oben genannte Aspekte, die für den Einsatz von Wärmespeichern 50 in luftbasierten Klimatisierungssystemen sprechen, abgedeckt werden. Zudem ergibt sich in Kombination mit VRF-Systemen (VRF : variable refrigerant flow), die einen Wärmeverschiebungsmodus besitzen, durch die zeitliche Entkopplung von Verdampfung und Kondensation ein höheres Wärmeverschiebungspotential.

Insbesondere zielt diese Entwicklung darauf ab die verfügbare Kälteleistung über das Leistungsvermögen, welches sich aus der aktuellen Kapazität des Verdichters 42 ergibt, zu steigern. Alternative mögliche Schaltungsvarianten, die weitere Verdichtermaschinen 42` oder Umwälzpumpen 45 hinzuziehen, benötigen weitere Antriebsleistung. Zudem sollen die für den Verdichter 42 relevanten Drucklagen im Verdampfer und/oder im Kondensator 41 nicht beeinflusst werden. Dies ist nur über die hier vorgestellte Schaltung möglich. Bei alternativen Verschaltungen muss entweder die Drucklage der Hoch- oder der Niederdruckseite bei Betrieb mit einem Speicher 50 angepasst werden.

Im Folgenden werden die genannten Vorteile des vorgestellten neuen Schaltungskonzepts gegenüber der Kältebevorratung auf der Grundlage einer herkömmlichen Verschaltung 100' erläutert:
Eine herkömmliche Verschaltung 100`, um Nutzenergie zu bevorraten, wäre mit einem zweiten Verdichter 42` und einer Kältemittelumwälzpumpe 45 möglich.

Figur 9 zeigt das Anlagenschema eines Multi-Split-Systems bei der Kältebevorratung. Analog dazu stellt Figur 10 die Funktion im log(p)-h-Diagramm dar, bei welchem der Logarithmus log(p) des Drucks p als Funktion der Enthalpie h dargestellt wird. Gezeigt wird also hier die Kältebevorratung durch eine alternative Verschaltung mit einem zusätzlichem Verdichter 42` und einer zusätzlichen Umwälzpumpe 45.

Um die nötigen Temperaturdifferenzen, die mit einer Ein- und Ausspeicherung zwangsweise verbunden sind, zu kompensieren, muss die Kälte bei einer tieferen Verdampfungstemperatur erzeugt werden. Dazu wird nach der regulären Entspannung vom Zustand 2 zum Zustand 3 der Druck vor dem Speicher 50 in einem weiteren Expansionsventil auf den Verdampfungsdruck beim Zustand 5 verringert. Anschließend wird in dem Speicher 50 auf der tieferen Drucklage vom Zustand 5 zum Zustand 6 verdampft. Daraufhin wird in dem zweiten Kompressor das Druckniveau vom tieferen Verdampfungsdruck des Zustands 6 wieder auf das Sauggasdruckniveau des Zustands 4 des ersten Kompressors gehoben.

Figur 10 veranschaulicht also einen Prozess der Kältebevorratung mittels der alternativen Verschaltung.

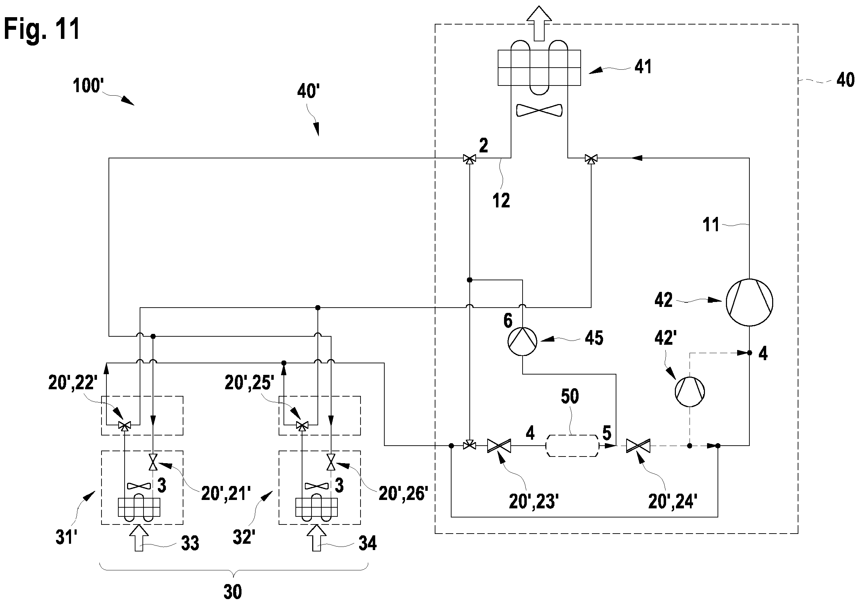

Eine Kältenutzung kann zeitversetzt durch eine Umwälzpumpe 45 für das Kältemittel erfolgen. Die Nutzung lässt sich anhand der Figuren 11 und 12 erläutern.

In Figur 11 wird Sauggas nach der Verdampfung in den Kühlstellen 1 und 2 zum Außengerät zurückgeführt. In diesem gelangt ein Teilstrom des gasförmigen Kältemittels zu der Speichereinheit 50. Das gasförmige Kältemittel gibt beim Durchströmen des Speichers 50 Wärme an das tiefer temperierte Speichermaterial ab.

Durch die Wärmeabgabe kondensiert das Kältemittel vom Zustand 4 zum Zustand 5, wie dies in Figur 12 gezeigt ist. Das nun flüssig vorliegende Kältemittel wird über eine Umwälzpumpe 45 auf die Drucklage gemäß Zustand 6 gefördert. Anschließend wird es mit dem flüssigen Kältemittelstrom aus dem Kondensator 41 gemäß Zustand 2 in der Flüssigkeitsleitung zusammengeführt. Das flüssige Kältemittel kann anschließend zu den Kühlstellen 33, 34 geführt werden und dort erneut verdampfen. Der erste Kompressor 42 wird bei der Nutzung durch den Speicher 50 entlastet, da nur noch ein Teilstrom des Sauggases durch den Kompressor 42 verdichtet werden muss.

Verglichen mit dem beschriebenen neuen Schaltungskonzept ist bei dieser herkömmlichen Anordnung 100' und Verschaltung für die Bevorratung der Kälte eine Absenkung der Drucklage notwendig. Die Kälte kann so nur durch eine Kaskadierung von Verdichtern 42 und 42' erzeugt werden. Auch bei der Ausspeicherung ist wieder Hilfsenergie durch die Verrichtung von mechanischer Arbeit mittels der Umwälzpumpe 45 nötig, auch wenn die Hilfsenergie bei der inkompressiblen Druckerhöhung im flüssigen Zustand energetisch deutlich geringer als bei der Verdichtung in der Gasphase ist.

Allgemein wird die Anlagenhydraulik deutlich komplexer. Der anlagentechnische Aufwand eines weiteren Verdichters 42` und einer Kältemittelumwälzpumpe 45, die besondere Anforderung hinsichtlich der Kältemitteleigenschaften und der Druckerhöhung besitzen muss, ist nicht unerheblich. Auch die Regelungstechnik muss auf die zusätzlichen kältetechnischen Komponenten abgestimmt und voraussichtlich erweitert werden.

Im Unterschied zu bestehenden Systemen liegt ein weiterer großer Vorteil beim erfindungsgemäßen Vorgehen (a) in der Effizienz der Speicherung von Nutzenergie ohne negativen Einfluss auf die Kreislaufparameter und (b) im Umfang der Wärmespeicherung. Die Effizienzsteigerung ist deutlich höher, als bei einer Wärmespeicherung für den Abtauvorgang oder bei einer Verbesserung der Betriebszustände, z.B. einer Absenkung der Kondensationstemperatur.

Während vorhandene Lösungen einen Betrieb aller Anlagenkomponenten benötigen, um für den laufenden Betrieb eine Verbesserung zu schaffen, beinhaltet das hier vorgestellte erfindungsgemäße Schaltungskonzept mit der Speicherung auf der Nutzseite weitere zusätzliche Anwendungsmöglichkeiten, z.B. eine getrennte Verwendung ohne Anlagenbetrieb, insbesondere durch einen natürlichen Umlauf des Kältemittels und ohne Betrieb des Kompressor, wie dies in den Figuren 13 und 14 dargestellt ist.

Der thermische Speicher 50 wird erfindungsgemäß direkt in den Kältemaschinenkreislauf 40' integriert. Dies erlaubt die Ein- und Ausspeicherung der Wärmeenergie über das Kältemittel. Der Speicher 50 für die thermische Energiebevorratung wird mit einer Kältemaschine oder Wärmepumpe alleinig oder parallel in Verbund zu weiteren Heiz- oder Kühlstellen 33, 34 beladen. Für die thermische Energieausspeicherung wird der Speicher 50 durch eine serielle Verschaltung mit einer oder mehreren Heiz/- oder Kühlstellen 33, 34 mittels Verdampfung oder Kondensation von Kältemittel entladen.

Im Falle einer Kühlung erfolgt die Kältebevorratung durch das Verdampfen von Kältemittel im Speicher 50. Für eine anschließende Kältenutzung wird bereits verdampftes Kältemittel von einer Kühlstelle 33, 34 durch den Speicher 50 geführt und dieses durch Wärmeabgabe an das kältere Speichermedium kondensiert. Das entstehende flüssige Kältemittel kann daraufhin auf gleicher Drucklage oder, durch Entspannung, auf tieferer Drucklage nochmals in einer Kühlstelle 33, 34 verdampfen und diese dadurch kühlen.

Bei einem Einsatz des Speichers 50 zu Heizzwecken, erfolgt die Wärmebevorratung mit einem Speicher 50 auf hohem Temperaturniveau durch Enthitzung oder Entwärmung und/oder Kondensation des Kältemittels. Für die Wärmenutzung wird Kältemittel in einer Heizstelle 33, 34 kondensiert. Dieses wird anschließend, nach einer Teilentspannung, durch den Speicher 50 geführt und durch Wärmeaufnahme von dem wärmeren Speichermedium verdampft. Das dampfförmige Kältemittel kann nun erneut zur Kondensation in einer Heizstelle 33, 34 verwendet werden.

Eine mögliche Umsetzung des hier beschriebenen Funktionsablaufs ist nachfolgenden im Zusammenhang mit einem Ausführungsbeispiel dargestellt.

Verglichen mit dem Ansatz eines Speichers als Unterkühler, ist der Speicher 50 bei dem hier betrachteten Schaltungskonzept nahezu beliebig in Leistung und Energie gestaltbar. Mit seiner Verschaltung kann er als Teil eines Verbunds parallel zu mehreren Wärmeübertrager 31, 32 für Kühl-/Heizstellen 33, 34 oder auch alleine geladen werden. Gleiches gilt für die Ausspeicherung, bei der dieser mit einem oder mehreren Wärmeübertragern 31, 32 für Kühl-/Heizstellen 33, 34 in Wechselwirkung stehen kann. Durch die unabhängigere Gestaltungsmöglichkeit des Speichers 50 - z.B. in Vergleich zu Unterkühlern - und durch das Verschalten mit einzelnen oder mehreren Wärmeübertragern 31, 32 kann ein direkter Einfluss auf die Leistung und Dynamik des Systems 100 genommen werden. So kann beispielsweise ein Speicher 50 bei der Ausspeicherung schneller durch das Betreiben mit zwei Wärmeübertragern 31, 32 entladen werden. Weiterhin kann die Dynamik und das Leistungsverhalten auch mit der Option eines getrennten Betreibens im natürlichen Kältemittelumlauf - d.h. ohne Kompressorbetrieb - durch das Interagieren mit einen oder mehreren Wärmeübertragern beeinflusst werden.

Neben der hier beschriebenen Konstellation eines Systems 100 mit oder als Kompressionskälteanlage ist die Erfindung ebenso anwendbar für Systeme mit Sorptionskälteanlage. Auch in diesem Fall kann der thermische Speicher 50 wie oben beschrieben eingesetzt werden.

Zusammenfassend bringt das erfindungsgemäße Schaltungskonzept mit Speicher 50 als Neuerungen einzeln oder in beliebiger Kombination unter anderem
(1) eine thermische Speicherung, die direkt und integriert in einem Kältekreislauf erfolgt,
(2) eine Bevorratung thermischer Energie auf der Nutzseite, um diese als Nutzenergie zur Verfügung stellen zu können,
(3) eine Steigerung der momentan abgegebenen Nutzwärme- oder Nutzkälteleistung über die durch das Fördervermögen des Verdichters gegebene Grenze hinaus oder eine Verringerung der Verdichterarbeit bereits durch das Bereitstellen von Nutzkälte,
(4) einen Integrationsansatz, welcher die Drucklagen in dem Gesamtsystem nicht beeinflusst und/oder keine zusätzlichen Komponenten für Verdichtung und/oder Förderung des Kältemittels erfordert,
(5) eine flexible Gestaltungsmöglichkeit des Speichers 50 in Betriebszeit und/oder Leistungsvermögen durch das Zusammenspiel mit einem oder mehreren Wärmeübertragern 31, 32 einer Wärmeübertrageranordnung 30 und/oder
(6) eine Möglichkeit des Betreibens einer derartigen Anlage 100 in einer getrennten Fahrweise und/oder ohne Verdichterbetrieb, z.B. durch einen natürlichen Kälteumlauf oder durch Umwälzen von Kältemittel.

### Ausführungsbeispiel

Die beigefügten Figuren zeigen beispielhaft eine hydraulische Verschaltung einer Ausführungsform gemäß der vorliegenden Erfindung.

Figur 1 zeigt eine Kälteanlage im Sinne eines erfindungsgemäßen Kühl- und/oder Heizsystems 100, z.B. eines direktverdampfenden Klimatisierungssystems mit zwei raumangeordneten Wärmeübertragern 31, 32 als Komponenten eine Wärmeübertrageranordnung 30 zum Heizen oder Kühlen und einen zusätzlichen thermischen Speicher 50. Es kann sich zum Beispiel um multiple Kühlstellen 33, 34 in einem oder mehreren Räumen handeln. Die Außeneinheit kann, wie bei Split-Klimageräten üblich, einen Kompressor 42 oder Verdichter und einen Kondensator 41 beinhalten. Die Wärmeübertrager 31, 32 der Wärmeübertrageranordnung 30 in den Räumen werden bei dem neuen erfindungsgemäßen Ansatz zusätzlich durch einen dezentralen und integrierten thermischen Speicher 50 ergänzt.

Das erfindungsgemäße Konzept sieht vor, dass der Speicher 50 mit den Wärmeübertragern 31, 32 parallel oder in Reihe geschaltet betrieben werden kann.

Figur 1 zeigt schematisch ein Beispiel für ein Gesamtschaltungskonzept mit Kältespeicher 50.

### Kältenutzung des Speichers ("Entladung des Speichers")

Für die Nutzung der Kälte wird der Speicher 50 in der Reihenschaltung betrieben. Figur 2 verdeutlicht in einer Detailansicht die Nutzung eines Speichers 50 beim Ausspeichern der Kälte, insbesondere durch Angabe einer schematischen Darstellung für eine hydraulische Verschaltung für die Kältenutzung .

In einer vereinfachten Darstellung zeigt Figur 3 die Reihenschaltung eines Speichers 50 mit zwei Wärmeübertragern 31, 32 einer Wärmeübertrageranordnung 30, insbesondere durch Erläuterung einer möglichen hydraulischen Verschaltung bei der Kältenutzung, insbesondere nach Art einer vereinfachten Reihenschaltung.

Nach einer Verdichtung und einer Wärmeabgabe in dem Kondensator 41 bei der Temperatur Tc wird flüssiges Kältemittel zum ersten Wärmeübertrager 31 geführt. In diesem wird das Kältemittel auf Verdampfungsdruck Te1 unterhalb der Raumtemperatur TR entspannt, wie dies in den Figuren 4 und 5 dargestellt ist, und unter Wärmeaufnahme aus dem Raum - entsprechend einer Kühlung - verdampft. Das nun dampfförmige Kältemittel tritt in den Speicher 50 ein, welcher die Temperatur Tsp mit Tsp < Te1 aufweist. Gemäß den Figuren 4 und 5 wird es dort durch Wärmeabgabe an das Speichermedium bei der Temperatur Tc1 wieder verflüssigt. Anschließend wird das verflüssigte Kältemittel auf ein Druckniveau mit zugehöriger Temperatur Te2 mit Te2 < Tsp entspannt und im zweiten Wärmeübertrager 32 erneut verdampft und überhitzt. Das Sauggas wird über die Leitung 11 zurück zum Kompressor oder Verdichter 42 geführt.

Damit wird die verfügbare Kälteleistung über das Leistungsvermögen, das sich aus der aktuellen Kapazität des Kompressors oder Verdichters 42 ergibt, gesteigert. Die Kapazität des Verdichters 42 kann durch die vorliegende Dimensionierung des Verdichters 42 oder die momentane Beschränkung des Bezugs elektrischer Antriebsleistung beschränkt sein. An Stelle der Drosselung zwischen Zustandspunkt 6 und 7 kann auch eine Regelung des Flüssigkeitsdurchflusses erfolgen. Zusätzlich kann auch eine regelungstechnische Verbindung vom Austritt des ersten Wärmeübertragers 31 gemäß dem Zustand 4 zur Saugseite des Verdichters 42 gemäß dem Zustand 8 sinnvoll sein.

Die Temperatur- und Drucklagen können aus Figur 5 entnommen werden, welche einen Prozess der Kältenutzung in einem log(p)-h-Diagramm und die entsprechenden Temperaturlagen bei der Kältenutzung schematisch beschreibt. In diesem Beispiel handelt es sich um die Kühlung von Raumluft.

Te2 bezeichnet die für den Kältekreislauf standardmäßig vorgegebene Verdampfungstemperatur. Die Kältelieferung am zweiten Wärmeübertrager erfolgt mit der treibenden Temperaturdifferenz TR-Te2 zwischen der Raumluft mit der Temperatur TR und der Standard-Verdampfungstemperatur Te2. Die Speichertemperatur Tsp kann so gewählt werden, dass eine Speicherladung - wie weiter unten beschrieben ist - ohne Veränderung der Standard-Verdampfungstemperatur Te2 erfolgt. Bei der hier diskutierten Entladung des Speichers 50 führt die Kopplung des ersten Wärmeübertragers 31 mit dem Speicher 50 dazu, dass für die Kältelieferung am ersten Wärmeübertrager 31 eine gegenüber dem Standardkreislauf reduzierte treibende Temperaturdifferenz TR-Te1 zwischen Raumluft mit Temperatur TR und der Verdampfungstemperatur Te1 besteht.

Nachfolgend werden die Prozessschritte nochmals unter Verwendung der Nomenklatur aus Figur 5 aufgeführt, wobei "i-j" den Übergang vom Zustand i zum Zustand j beschreibt, wie diese in den Phasen- oder Zustandsdiagrammen der Figuren dargestellt sind.

Nach einer Komprimierung 8-1 des Kältemittels und einer anschließenden Verflüssigung 1-2 treten folgende Prozessschritte bei der Kältenutzung des Speichers auf:

| | |
|---|---|
| 2-3 | Entspannung im Expansionsventil 21 des ersten Wärmeübertragers 31. |
| 3-4 | Verdampfung im ersten Wärmeübertrager 31 auf Temperaturniveau Te1. |
| 5-6 | Kondensation im Speicher 50 auf Temperaturniveau Te1, sofern kein Druckabfall zwischen dem ersten Wärmeübertrager 31 und dem Speicher 50 auftritt, und Wärmeabgabe an den Speicher mit Speichertemperatur Tsp. |
| 6-7 | Entspannung am/nach dem Ausgang aus dem Speicher 50 in der Rückführleitung 19-2 im Expansionsventil 24. Anstelle des Expansionsventils kann auch ein Flüssigkeitsableiter eingesetzt werden. |
| 7-8 | Verdampfung im zweiten Wärmeübertrager 32 auf Temperaturniveau Te2. |

Mit dieser Schaltung kann die Kältenutzung ohne Beeinflussung, der für den Verdichter 42 relevanten Drucklagen TC und Te2 erfolgen. Bei dem zweiten Wärmeübertrager 32 steht gegenüber dem ersten Wärmeübertrager 31 ein größeres Temperaturgefälle zwischen dem Raum und der Verdampfungstemperatur zur Verfügung. Handelt es sich bei den Inneneinheiten (IE) um baugleiche, identisch betriebene Wärmeübertrager, so besitzt IE2 ein höheres Leistungsvermögen.

### Kältebevorratung im Speicher (Beladung des Speichers 50)

Die Kältebevorratung geschieht durch eine parallele Verschaltung des Speichers 50. Die Figuren 6 und 7 verdeutlichen dieses Vorgehen schematisch, wobei dort insbesondere in Figur 6 eine entsprechende hydraulische Verschaltung und in Figur 7 ein Prozess der Kältebevorratung in einem log(p)-h-Diagramm erläutert werden.

Figur 8 zeigt Temperaturschemata für die eingesetzten Wärmeübertrager und den Wärmespeicher.

Nach einer Verdichtung und einer Wärmeabgabe in dem Kondensator 41 mit Temperatur Tc wird flüssiges Kältemittel zu den ersten und zweiten Wärmeübertragern 31 und 32 der Wärmeübertrageranordnung 30 und zum Speicher 50 geführt. Dieses wird parallel in den ersten und/oder zweiten Wärmeübertragern 31, 32 und im Speicher 50 mit der Temperatur Te verdampft. Te ist die standardmäßig eingestellte Verdampfungstemperatur des Kältekreislaufs, identisch mit der im Abschnitt "Kältenutzung des Speichers" genannten Temperatur Te2. In den Wärmeübertragern 31, 32 kann die Verdampfungsenthalpie direkt zur Kühlung der Umgebung - im Normalfall Raumluft des zu kühlenden Raums - verwendet werden. Im Speicher 50 wird dem Speichermedium Wärme entzogen, so dass dieses im weiteren Prozessverlauf wieder die Möglichkeit hat, Kondensationswärme aufzunehmen.

Figur 8 zeigt die treibenden Temperaturdifferenzen für die Bereitstellung von Nutzkälte im ersten und zweiten Wärmeübertrager 31, 32 sowie im Speicher 50. Im Fall der Kühlung eines Raumes ist in den Wärmeübertragern 31, 32 die treibende Temperaturdifferenz gegeben durch die Differenz von Raumtemperatur TR und Verdampfungstemperatur Te. Beim Speicher 50 ergibt sich die Temperaturdifferenz zwischen der Temperatur des Speichermediums Tsp und der Verdampfungstemperatur Te.

Alle Kühlstellen 33, 34 - zum Beispiel im Zusammenhang mit entsprechenden ersten und zweiten Wärmeübertragern 31, 32 - werden dabei bei gleichem Saugdruck des Verdichters 42 betrieben. Die Beladung des Speichers 50 kann auch ohne Parallelbetrieb der ersten und zweiten Wärmeübertrager 31 bzw. 32 erfolgen. Bei momentan geringerer Kälteanforderung kann auch nur einer der ersten und zweiten Wärmeübertrager 31 und 32 parallel mit dem in Beladung befindlichen Speicher 50 betrieben werden. Darüber hinaus ist auch eine Speicherladung bei Stillstand der ersten und zweiten Wärmeübertrager 31 und 32 möglich.

Folgende Prozessschritte sind dabei möglich, wobei "i-j" den Übergang vom Zustand i zum Zustand j beschreibt, wie diese in den Phasen- oder Zustandsdiagrammen der Figuren dargestellt sind:

| | |
|---|---|
| 4-1 | Komprimierung durch den Verdichter oder Kompressor 42, |
| 1-2 | Wärmeabgabe im Verflüssiger oder Kondensator 41, |
| 2-3 | Parallele Entspannung des flüssigen Kältemittels in die jeweilige Komponente (erster und/oder zweiter Wärmeübertrager 31, 32 sowie Speicher 50), |
| 3-4 | Parallele Verdampfung in der jeweiligen Komponente (erster und/oder zweiter Wärmeübertrager 31, 32 sowie Speicher 50). |

Figur 8 beschreibt die jeweiligen Temperaturlagen bei einem Vorgang der Kältebevorratung im Sinne einer Speicherladung.

Sobald der Speicher 50 vollständig geladen ist, schließt sich das vorgeschaltete Expansionsventil 23 oder der Kältemitteldurchfluss wird durch ein zusätzliches Absperrorgan unterbrochen. Die momentane Wärmeleistungsaufnahme des Speichers 50 kann durch ein Drosselorgan in der Saugleitung 11 zum Verdichter 42 geregelt werden. Unabhängig vom erreichten Ladezustand steht der Speicher 50 jederzeit für eine Umschaltung zum Entladebetrieb zur Verfügung.

Es werden nachfolgend alternative Nutzungsmöglichkeiten der Schaltung des erfindungsgemäßen Systems 100 mit einer Anordnung als Heatpipe beschrieben:
Eine Nutzung der im Wärmespeicher 50 gespeicherten thermischen Energie ohne Verdichterbetrieb kann in einer Betriebsart einer reinen Heatpipe erfolgen. Die vorgeschlagene Hydraulik oder fluidmechanische Verschaltung kann auch dementsprechend ausgelegt werden, um einen reinen Heatpipe-Betrieb zu bewirken.

Bei der Heatpipe-Verschaltung ist der Speicher 50 geodätisch oben angeordnet, wie dies im Zusammenhang mit der Darstellung der Figur 13 erläutert ist, und fungiert als eine Wärmesenke. Kältemittel kann im Speicher 50 kondensieren und strömt anschließend als flüssiges Kältemittel in einen Verdampfer-Wärmeübertrager 32, also einen Wärmeübertrager 32 nach Art eines Verdampfers, in welchem das flüssige Kältemittel unter Wärmeaufnahme aus dem Raum, welcher als Wärmequelle fungiert, verdampft. Das gasförmige Kältemittel wird erneut durch den Speicher 50 geführt, in welchem es durch Wärmeabgabe an das Speichermaterial, welches als Wärmesenke fungiert, kondensiert.

Figur 14 erläutert das Heatpipe-Prinzip mit einem log(p)-h-Diagramm.

In Figur 15 ist die jeweilige Lage der Temperaturniveaus dargestellt.

Figur 13 erläutert schematisch die Verschaltung einer Heatpipe.

Mit einer Verschaltung nach Art einer Heatpipe lässt sich bevorratete Kälteenergie über den Wärmeübertrager 32 an einen Raum übertragen. Auf ähnliche Weise ist das Heatpipe-Prinzip auch zum Heizen verwendbar. Beim Heizen wird nämlich Kältemittel im Speicher 50 verdampft und bei der Kondensation im Wärmeübertrager 32 wird Wärme freigesetzt, die auf die Raumluft übertragen wird.

Folgende weitere Aspekte sind beachtenswert und einzeln oder in beliebiger Kombination bei Ausführungsformen der vorliegenden Erfindung einsetzbar:
1. Die vorliegende Erfindung schafft unter anderem ein kombiniertes Wärmepumpenkühl- und/oder -heizsystem 100 mit einem oder mit mehreren in den Kältekreislauf integrierten thermischen Speichern 50, mit einer Verschaltung, dass die Beladung der Speicher 50 durch alleinigen oder parallelen Betrieb mit einem oder mehreren Wärmeübertragern 31, 32 einer Wärmeübertrageranordnung 30, nämlich im Sinne von Verdampfern bzw. Verflüssigem im Kühl- bzw. Heizbetrieb, erfolgen kann und die Entladung durch den seriellen Betrieb mit einem oder mehreren Wärmeübertragern 31, 32, zum Beispiel als Verdampfer- bzw. Verflüssiger im Heiz- bzw. Kühlbetrieb, umgesetzt werden kann. Die Entladung mit mehreren Wärmeübertragern 31, 32 schließt die Möglichkeit ein, dass ein aufeinanderfolgendes abwechselndes Durchlaufen von Wärmeübertragern 31, 32 und einem oder mehreren Speichern 50 realisiert wird.
2. Denkbar ist ferner ein kombiniertes Wärmepumpenkühl- und/oder -heizsystem 100, wobei der Speicher 50 in mehrere Speicherelemente unterteilt ist oder werden kann oder es sich um einen großen Speicher 50 mit mehreren Durchgängen handelt und/oder die mehreren Wärmeübertrager 31, 32 als Sektionen eines zusammenhängenden Wärmeübertragerapparats 30 ausgeführt werden und je nach Betriebsmodus zum Be- und Entladen parallel bzw. seriell verschaltet werden
3. Alternativ kann der verwendete Speicher 50 Nutzwärme durch Enthitzung und/oder Kondensation des Kältemittels oder anderer Abwärmenutzung, wie z.B. Unterkühlerwärme, ungenutzte Energieströme, bevorraten und diese zeitversetzt durch Verdampfung des Kältemittels in dem Speicher 50 und anschließender Kondensation in einem nachgeschalteten Wärmeübertrager 32 zum Heizen freigeben.
4. Weiter alternativ kann ein dabei verwendeter thermischer Speicher 50 Nutzkälte durch Verdampfung des Kältemittels oder anderer ungenutzter Energieströme bevorraten und diese zeitversetzt durch Kondensation des Kältemittels in dem Speicher 50 und anschließender Verdampfung auf gleichem oder gesenktem Druckniveau in einem nachgeschalteten Wärmeübertrager 32 zum Kühlen verwenden.
5. Ein jeweils eingesetzter thermischer Speicher 50 kann durch einmaliges oder mehrmaliges serielles Durchströmen von Kältemittel eine oder mehrere Kühl- oder Heizstellen 33, 34 energetisch versorgen.
6. Ein bei der Erfindung eingesetzter thermischer Speicher 50 ist durch die seriell/parallel direkte Kältekreiseinbindung in seiner Leistungsdynamik frei gestaltbar.
7. Ein jeweiliger thermischer Speicher 50 kann für die Wärme- bzw. Kältenutzung in mehreren Wärmeübertragern 31, 32 ähnlich wie Wärmeübertragern von Split-Systemen oder in einem einzelnen Wärmeübertrager 31, 32 verwendet werden.
8. Ein bei der Erfindung eingesetzter thermischer Speicher 50 kann in einem Kältekreis die direkte Speicherung von Nutzenergie verwirklichen.
8a. Ein bei der Erfindung eingesetzter thermischer Speicher 50 kann in einem Wärmepumpenkreislauf die direkte Speicherung von Nutzwärme verwirklichen.
9. Ein thermischer Speicher 50 kann bei der vorliegenden Erfindung nach der Beladung im Anlagenbetrieb ohne weitere Energiezufuhr bzw. ohne weiteren Kompressorbetrieb entladen werden. Die Entladung geschieht z.B. durch einen Naturumlauf. Dies kann durch die bauliche Anordnung des Speichers 50 ermöglicht werden. Dabei werden die physikalischen Eigenschaften der jeweiligen Fluide ausgenutzt. Dies kann durch ein Zweiphasen-Thermosiphon-Prinzip geschehen.
10. Als weitere Betriebsweise können mit einem Bypass des Kältemittels um den Speicher 50 oder um den ersten Wärmeübertrager 31 und den Speicher 50 die Kältemittelmenge und der Leistungsumsatz des ersten Wärmeübertragers 31 und des Speichers 50 reguliert werden. Alternativ könnte auch eine Regelung des ersten Expansionsventils vor dem ersten Wärmeübertrager 31 auf die Überhitzung nach dem zweiten Wärmeübertrager 32 erfolgen. Für dies müsste im ersten Wärmeübertrager 31 keine vollständige Verdampfung vorliegen, da die Verdichtung nicht direkt nachgeschaltet ist. Das Kältemittel könnte im Speicher 50 kondensieren und anschließend eine Verdampfung mit Überhitzung im zweiten Wärmeübertrager 32 erfahren.

Folgende weitere Anwendungsfälle des neuen Schaltungskonzepts sind nachfolgend aufgeführt, wobei vereinfacht alle Anwendungen für einen Speicher 50 auf niedriger Temperatur - d.h. für einen Kältespeicher - beschrieben sind und diese größtenteils auch auf einen Wärmespeicher 50 im Wärmepumpenbetrieb übertragbar sind:
Kältenutzung:
   - Speichern von Nutzkälte in Multi-Split-Klimageräten,
   - Speicher 50 als Kälteleistungsbooster in Multi-Split-Klimageräten (Speicher 50 zur Entlastung der Kälteanlage, durch den Leistungsboost kann der Verdichter seine Drehzahl verringern) und/oder
   - Ausspeicherung von Nutzenergie durch Heatpipe-Betrieb.
Smarte Stromnutzung:
   - Erweiterung von Split-Klimasystemen mit einer zusätzlichen Speichereinheit, um zeitlich variable Stromtarife zu nutzen und/oder
   - Kälteanlage 100 mit Speicher 50, um regenerative Stromüberschüsse zu nutzen Speicherung thermischer Energien:
   - Speicher 50 eingesetzt in VRF-Systemen, um auch zeitversetzt Wärme verschieben zu können (Heizen - Kühlen) und/oder
   - Speicher 50 in direktverdampfenden Luftklimaanlagen, um Energie für zyklisch auftretende Prozesse (Heizen - Kühlen) zwischenzuspeichern.

Die Ausnutzung von günstigeren Umgebungsbedingungen kann erfolgen im Zusammenhang mit
- einer Kälteerzeugung bei tieferen Umgebungstemperaturen, so dass die Abwärmeabgabe an die Umgebung erleichtert erfolgt,
- einer Speicherladung bei günstigen Umgebungsbedingungen, z.B. einer direkten Nutzung kalter Außentemperaturen, und einer Übertragung der Nutzkälte an den Raum durch einen Heatpipe-Betrieb und/oder
- einem Speicher 50 als Wärmequelle für den Wärmepumpenbetrieb.

Weitere Optionen sind
- eine kleinere Dimensionierung des Anlagensystems,
- eine Schallreduktion bei der Wärmeaufnahme und Wärmeabgabe an der Außeneinheit durch Glättung von Leistungsspitzen und/oder
- eine saisonale Speicherung.

Neben der vorstehenden schriftlichen Beschreibung der Erfindung wird zu deren ergänzender Offenbarung hiermit explizit auf die zeichnerische Darstellung der Erfindung in den Figuren 1 bis 15 Bezug genommen.

### Bezugszeichenliste

- 1: Zustand
- 2: Zustand
- 3: Zustand
- 4: Zustand
- 5: Zustand
- 6: Zustand
- 7: Zustand
- 8: Zustand

- 10: Leitungsanordnung
- 11: Leitung, Sauggasleitung
- 11-1: Anschlussknoten
- 11-2: Anschlussknoten
- 12: Leitung, Flüssigkeitsleitung
- 12-1: Anschlussknoten
- 12-2: Anschlussknoten
- 13: Leitung
- 14: Leitung
- 15: Leitung
- 16: Leitung
- 17: Leitung
- 18: Leitung
- 19-1: (serielle) Leitung oder Rückführleitung
- 19-2: (serielle) Leitung oder Rückführleitung
- 19-3: Anschlussknoten
- 19-4: Anschlussknoten

- 20: Ventilanordnung
- 20': herkömmliche Ventilanordnung
- 21: Ventileinrichtung, Ventil
- 21': herkömmliche Ventileinrichtung, Ventil
- 22: Ventileinrichtung, Ventil
- 22': herkömmliche Ventileinrichtung, Ventil
- 23: Ventileinrichtung, Ventil
- 23': herkömmliche Ventileinrichtung, Ventil
- 24: Ventileinrichtung, Ventil
- 24': herkömmliche Ventileinrichtung, Ventil
- 25: Ventileinrichtung, Ventil
- 25': herkömmliche Ventileinrichtung, Ventil
- 26: Ventileinrichtung, Ventil
- 26': herkömmliche Ventileinrichtung, Ventil
- 27: Ventileinrichtung, Ventil
- 27': herkömmliche Ventileinrichtung, Ventil

- 30: Wärmeübertrageranordnung
- 30': herkömmliche Wärmeübertrageranordnung
- 31: Wärmeübertrager
- 31 `: herkömmlicher Wärmeübertrager
- 32: Wärmeübertrager
- 32': herkömmlicher Wärmeübertrager
- 33: Kühlstelle, Heizstelle
- 34: Kühlstelle, Heizstelle

- 40: Wärmepumpenanordnung, Kältemaschinenanordnung
- 40': Wärmepumpenkreislauf oder -system, Kältemaschinenkreislauf oder -system
- 41: Kondensator
- 42: Kompressor, Verdichter
- 42': (zweiter) Kompressor, Verdichter
- 45: Umwälzpumpe

- 50: Wärme- und/oder Kältespeicher

- 60: Graph
- 61: Abszisse
- 62: Ordinate
- 63: Spur, Phasenlinie
- 64: Spur, Prozessverlauf

- 70: Graph
- 71: Abszisse
- 72: Ordinate
- 73: Spur, Phasenlinie
- 74: Spur, Prozessverlauf
- 80: Graph
- 81: Abszisse
- 82: Ordinate
- 83: Spur, Phasenlinie
- 84: Spur, Prozessverlauf

- 90: Graph
- 91: Abszisse
- 92: Ordinate
- 93: Spur, Phasenlinie
- 94: Spur, Prozessverlauf

- 100: Kühl-/Heizsystem
- 100': herkömmliches Kühl-/Heizsystem
- 110: Graph
- 111: Abszisse
- 112: Ordinate
- 113: Spur, Phasenlinie
- 114: Spur, Prozessverlauf

## Patentansprüche

1. Kühl- und/oder Heizsystem (100) mit einem Wärmepumpenkreislauf (40') für ein Wärmeübertragungsmedium,
- wobei der Wärmepumpenkreislauf (40')
(i) mit einer Wärmeübertrageranordnung (30) mit einem ersten und einem zweiten Wärmeübertrager (31, 32) als eine oder für eine Kühl-/Heizstelle (33, 34) für eine Kälte-/Wärmenutzung,
(ii) mit einem Wärmespeicher (50), und
(iii) mit einer Leitungsanordnung (10) ausgebildet ist, **dadurch gekennzeichnet, dass** der Wärmespeicher (50) ausgebildet ist,
(iv) in einem ersten Betriebsmodus zum Beladen des Wärmespeichers (50) mit thermischer Energie zu den Wärmeübertragern (31, 32) parallel geschaltet vom Wärmeübertragungsmedium durchströmt zu werden und
(v) in einem zweiten Betriebsmodus zum Entladen von thermischer Energie aus dem Wärmespeicher (50) zu den Wärmeübertragern (31, 32) seriell geschaltet und in einer Anordnung mit serieller Zwischenschaltung zwischen dem ersten Wärmeübertrager (31) und dem zweiten Wärmeübertrager (32) vom Wärmeübertragungsmedium durchströmt zu werden,
indem:
- jeder Wärmeübertrager (31, 32) sowie der Wärmespeicher (50) eingangsseitig und in einer Fließrichtung des Wärmeübertragungsmediums stromaufwärts gelegen jeweils eine erste Ventileinrichtung (21, 23, 25) aufweisen,
- der erste Wärmeübertrager (31) und der Wärmespeicher (50) ausgangsseitig und in der Fließrichtung des Wärmeübertragungsmediums stromabwärts gelegen jeweils eine zweite Ventileinrichtung (22, 24) aufweisen,
- die jeweilige erste Ventileinrichtung (21, 23, 25) als Absperrventil und/oder als Expansionsventil ausgebildet ist,
- die jeweilige zweite Ventileinrichtung (22, 24) als Umschaltventil, als Dreiwegeventil und/oder als eine Kombination mit oder aus zwei Durchgangsventilen zur Umschaltung ausgebildet ist,
- die Leitungsanordnung (10) eine erste serielle Rückführleitung (19-1) aufweist für eine steuerbare fluidmechanische Verbindung zwischen der zweiten Ventileinrichtung (22) des ersten Wärmeübertragers (31) und einem Anschlussknoten (19-3) in einer Leitung (15) zwischen der ersten Ventileinrichtung (23) des Wärmespeichers (50) und dem Wärmespeicher (50),
- die Leitungsanordnung (10) eine zweite serielle Rückführleitung (19-2) aufweist für eine steuerbare fluidmechanische Verbindung zwischen der zweiten Ventileinrichtung (24) des Wärmespeichers (50) und einem Anschlussknoten (19-4) in einer Leitung (17) zwischen der ersten Ventileinrichtung (25) eines zweiten Wärmeübertragers (32) und dem zweiten Wärmeübertrager (32), und
- Eingangsseiten der ersten Ventileinrichtungen (21, 23, 25) fluidmechanisch mit einer gemeinsamen, das gasförmige Wärmeübertragungsmedium zuführenden Leitung (12) und Ausgangsseiten der zweiten Ventileinrichtungen (22, 24) und des zweiten Wärmeübertragers (32) mit einer gemeinsamen, das Wärmeübertragungsmedium abführenden Saugleitung (11) verbunden sind.

2. Kühl- und/oder Heizsystem (100) nach Anspruch 1, bei welchem der Wärmepumpenkreislauf (40') des Weiteren ausgebildet ist (vi) mit einer Wärmepumpenanordnung (40), welche jeweils mit einem oder mehreren Verdichtern (42), Kondensatoren (41) und/oder Verdampfern ausgebildet ist, (vii) mit der Leitungsanordnung (10) zur gesteuerten fluidmechanischen Verbindung von Komponenten des Wärmepumpenkreislaufs (40') und/oder zum parallel und/oder seriell geschalteten Durchströmen des Wärmespeichers (50) mit dem Wärmeübertragungsmedium.

3. Betriebsverfahren für ein Kühl- und/oder Heizsystem (100),
wobei das Kühl- und/oder Heizsystem (100) nach einem der vorangehenden Ansprüche ausgebildet ist und
wobei bei dem Betriebsverfahren:
- in einem ersten Betriebsmodus zum Beladen des Wärmespeichers (50) mit thermischer Energie der Wärmespeicher (50) zu den Wärmeübertragern (31, 32) parallel geschaltet vom Wärmeübertragungsmedium durchströmt wird und
- in einem zweiten Betriebsmodus zum Entladen von thermischer Energie aus dem Wärmespeicher (50) der Wärmespeicher (50) zu den Wärmeübertragern (31, 32) seriell geschaltet und mit serieller Zwischenschaltung zwischen dem ersten Wärmeübertrager (31) und dem zweiten Wärmeübertrager (32) vom Wärmeübertragungsmedium durchströmt wird.

4. Betriebsverfahren nach Anspruch 3, bei welchem
- der Wärmespeicher (50) derart direkt und/oder integriert betrieben wird, dass eine direkte Speicherung thermischer Energie auf einer Nutzseite des Kühl- und/oder Heizsystems (100) erfolgt und/oder
- das Wärmeübertragungsmedium in Strömungsrichtung zuerst einen oder mehrere erste Wärmeübertrager (31), dann den einen oder mehrere Wärmespeicher (50) und dann einen oder mehrere zweite Wärmeübertrager (32) durchströmt.

5. Betriebsverfahren nach einem der Ansprüche 3 und 4, bei welchem der Wärmespeicher (50) derart direkt und/oder integriert betrieben wird, dass der Betrieb des Kühl- und/oder Heizsystems (100) ohne Beeinflussung einer Drucklage und/oder einer Temperaturlage, in einem zu Grunde liegenden Verdampfungsprozess und/oder Kondensationsprozess und in einem oder in mehreren Verdampfern und/oder in einem oder in mehreren Kondensatoren (41) der zu Grunde liegenden Wärmepumpenanordnung (40) erfolgt.

6. Betriebsverfahren nach einem der Ansprüche 3 bis 5, bei welchem der Wärmespeicher (50) zur Speicherung thermischer Energie ohne oder weitestgehend ohne Temperaturänderung eines zu Grunde liegenden Speichermediums betrieben wird.

7. Betriebsverfahren nach einem der Ansprüche 3 bis 6,
- welches zum Kühlen und/oder Heizen ausgeführt wird,
- bei welchem bei einem Kühlen eine Kältebevorratung erfolgt durch ein Verdampfen eines Wärmeübertragungsmediums als Kältemittel im Wärmespeicher (50), wobei für eine Kältenutzung für eine anschließende nochmalige Nutzung bereits verdampftes Wärmeübertragungsmedium von einer Kühlstelle (33, 34) durch den Wärmespeicher (50) geführt und durch Wärmeabgabe an ein zu Grunde liegendes kälteres Speichermedium im Wärmespeicher (50) kondensiert wird und das kondensierte und flüssige Wärmeübertragungsmedium bei einer gleichen Drucklage oder bei tieferer Drucklage, zum Beispiel durch Entspannung erneut an einer Kühlstelle (33, 34) unter Aufnahme thermischer Energie verdampft wird, um diese zu kühlen, und/oder
- bei welchem bei einem Heizen eine Wärmebevorratung erfolgt mit dem Wärmespeicher (50) auf einem höheren Temperaturniveau durch Kühlen und/oder Kondensieren eines Arbeitsmittels im Wärmespeicher (50), wobei für eine Wärmenutzung Wärmeübertragungsmedium an einer Heizstelle (33, 34) kondensiert, anschließend nach einer Teilentspannung durch den Wärmespeicher (50) geführt und durch Wärmeaufnahme von einem zu Grunde liegenden wärmeren Speichermedium verdampft wird und das verdampfte Wärmeübertragungsmedium erneut zum Kondensieren an einer Heizstelle (33, 34) kondensiert wird, um diese durch Abgabe thermischer Energie aufzuheizen.

8. Betriebsverfahren nach einem der Ansprüche 3 bis 7, welches - zumindest teilweise - ohne Betrieb von Anlagenkomponenten und/oder durch einen natürlichen Umlauf des Wärmeübertragungsmediums ausgeführt wird.

## Claims

1. Cooling and/or heating system (100) comprising a heat pump circuit (40') for a heat transfer medium,
- wherein the heat pump circuit (40') is configured to comprise
(i) a heat transfer arrangement (30) having a first and a second heat exchanger (31, 32) as a or for a cooling/heating point (33, 34) for use of heat/cold,
(ii) a heat accumulator (50), and
(iii) a line arrangement (10),
**characterised in that** the heat accumulator (50) is configured
(iv) to be flown-through by a heat transfer medium in a manner connected in parallel to the heat exchangers (31, 32) in a first operating mode for charging the heat accumulator (50) with thermal energy, and
(v) to be flown-through by a heat transfer medium in a manner connected in series to the heat exchangers (31, 32) and in an arrangement having a series interconnection between the first heat exchanger (31) and the second heat exchanger (32) in a second operating mode for discharging thermal energy from the heat accumulator (50),
by
- each heat exchanger (31, 32) and the heat accumulator (50) in each case comprising a first valve device (21, 23, 25) on the input side and located upstream in a flow direction of the heat transfer medium,
- the first heat exchanger (31) and the heat accumulator (50) in each case comprising a second valve device (22, 24) on the output side and located downstream in the flow direction of the heat transfer medium,
- the respective first valve device (21, 23, 25) being configured as a shutoff valve and/or as an expansion valve,
- the respective second valve device (22, 24) being configured as a switchover valve, as a three-way valve, and/or as a combination comprising or made of two through-way valves for switching,
- the line arrangement (10) comprising a first serial return line (19-1) for a controllable fluid-mechanical connection between the second valve device (22) of the first heat exchanger (31) and a connection node (19-3) in a line (15) between the first valve device (23) of the heat accumulator (50) and the heat accumulator (50),
- the line arrangement (10) comprising a second series return line (19-2) for a controllable fluid-mechanical connection between the second valve device (24) of the heat accumulator (50) and a connection node (19-4) in a line (17) between the first valve device (25) of a second heat exchanger (32) and the second heat exchanger (32), and
- input sides of the first valve device (21, 23, 25) being connected in a fluid-mechanical manner to a common line (12) that supplies the gaseous heat transfer medium, and output sides of the second valve device (22, 24) and of the second heat exchanger (32) being connected to a common suction line (11) that discharges the heat transfer medium.

2. Cooling and/or heating system (100) according to claim 1, in which the heat pump circuit (40') is furthermore configured to comprise (vi) a heat pump assembly (40) which is configured in each case with one or more compressors (42), condensers (41) and/or evaporators, (vii) the line arrangement (10) for controlled fluid-mechanical connection of components of the heat pump circuit (40') and/or for flow of the heat transfer medium through the heat accumulator (50) in a manner connected in parallel and/or in series.

3. Operating method for a cooling and/or heating system (100),
wherein the cooling and/or heating system (100) is configured according to any one of the preceding claims, and
wherein, in the operating method:
- in a first operating mode for charging the heat accumulator (50) with thermal energy, heat transfer medium flows through the heat accumulator (50) in a manner connected in parallel to the heat exchangers (31, 32), and
- in a second operating mode for discharging thermal energy from the heat accumulator (50), heat transfer medium flows through the heat accumulator (50) in a manner connected in series to the heat exchangers (31, 32) and having a series interconnection between the first heat exchanger (31) and the second heat exchanger (32).

4. Operating method according to claim 3, in which
- the heat accumulator (50) is operated directly and/or in an integrated manner in such a way that a direct storage of thermal energy takes place on a use side of the cooling and/or heating system (100), and/or
- the heat transfer medium flows, in the flow direction, firstly through one or more first heat exchangers (31), then through the one or more heat accumulators (50), and then through one or more second heat exchangers (32).

5. Operating method according to one of claims 3 and 4, in which the heat accumulator (50) is operated directly and/or in an integrated manner in such a way that the operation of the cooling and/or heating system (100) takes place without influencing a pressure condition and/or a temperature condition in an underlying evaporation process and/or condensation process and in one or more evaporators and/or in one or more condensers (41) of the underling heat pump assembly (40).

6. Operating method according to any of claims 3 to 5, in which the heat accumulator (50) is operated without or largely without changing the temperature of an underlying storage medium for storing thermal energy.

7. Operating method according to any of claims 3 to 6,
- which is performed for cooling and/or heating,
- in which, in a cooling process, cooling energy is stored by evaporating a heat transfer medium as a refrigerant in the heat accumulator (50), wherein for a use of cooling energy for a subsequent further use, already evaporated heat transfer medium is guided from a cooling point (33, 34) through the heat accumulator (50), and is condensed by emitting heat to an underlying colder storage medium in the heat accumulator (50), and the condensed and fluid heat transfer medium is evaporated again at the same pressure condition or at a lower pressure condition, for example by depressurisation, at the cooling point (33, 34) while absorbing energy in order to cool said point, and/or
- in which, in a heating process, heat is stored using the heat accumulator (50) at a higher temperature level by cooling and/or condensing a working medium in the heat accumulator (50), wherein for use of heat, heat transfer medium is condensed at a heating point (33, 34), subsequently guided through the heat accumulator (50), following partial depressurisation, and is evaporated by absorbing heat from an underlying warmer storage medium, and the evaporated heat transfer medium is condensed again, for condensing, at a heating point (33, 34), in order to heat said point by outputting thermal energy.

8. Operating method according to any of claims 3 to 7, which is carried out, at least in part, without operation of installation components and/or by a natural circulation of the heat transfer medium.

## Revendications

1. Système de refroidissement et/ou de chauffage (100) avec un circuit de pompe à chaleur (40') pour un fluide caloporteur,
- dans lequel le circuit de pompe à chaleur (40') est réalisé
(i) avec un ensemble d'échangeurs de chaleur (30) avec un premier et un second échangeur de chaleur (31, 32) en tant qu'un ou pour un point de refroidissement/de chauffage (33, 34) pour une utilisation du froid/de la chaleur,
(ii) avec un accumulateur de chaleur (50), et
(iii) avec un ensemble de conduite (10),
**caractérisé en ce que** l'accumulateur de chaleur (50) est réalisé
(iv) afin d'être traversé par le fluide caloporteur dans un premier mode de fonctionnement pour la charge de l'accumulateur de chaleur (50) avec de l'énergie thermique en étant monté en parallèle des échangeurs de chaleur (31, 32) et
(v) afin d'être traversé par le fluide caloporteur dans un second mode de fonctionnement pour la décharge de l'énergie thermique de l'accumulateur de chaleur (50) monté en série par rapport aux échangeurs de chaleur (31, 32) et dans un ensemble avec une interposition en série entre le premier échangeur de chaleur (31) et le second échangeur de chaleur (32),
**en ce que** :
- chaque échangeur de chaleur (31, 32) ainsi que l'accumulateur de chaleur (50) présentent côté entrée et placés en amont dans un sens d'écoulement du fluide caloporteur respectivement un premier dispositif de soupape (21, 23, 25),
- le premier échangeur de chaleur (31) et l'accumulateur de chaleur (50) présentent côté sortie et placés en aval dans le sens d'écoulement du fluide caloporteur respectivement un second dispositif de soupape (22, 24),
- le premier dispositif de soupape (21, 23, 25) respectif est réalisé en tant que soupape d'arrêt et/ou en tant que soupape de détente,
- le second dispositif de soupape (22, 24) respectif est réalisé en tant que soupape de commutation, en tant que soupape à trois voies et/ou en tant que combinaison avec ou de deux soupapes continues pour la commutation,
- l'ensemble de conduite (10) présente une première conduite de retour (19-1) en série pour une liaison mécanique fluide commandable entre le second dispositif de soupape (22) du premier échangeur de chaleur (31) et un noeud de raccordement (19-3) dans une conduite (15) entre le premier dispositif de soupape (23) de l'accumulateur de chaleur (50) et l'accumulateur de chaleur (50),
- l'ensemble de conduite (10) présente une seconde conduite de retour (19-2) en série pour une liaison mécanique fluide commandable entre le second dispositif de soupape (24) de l'accumulateur de chaleur (50) et un noeud de raccordement (19-4) dans une conduite (17) entre le premier dispositif de soupape (25) d'un second échangeur de chaleur (32) et le second échangeur de chaleur (32), et
- des côtés d'entrée des premiers dispositifs de soupape (21, 23, 25) sont reliés de manière mécanique et fluide à une conduite (12) commune acheminant le fluide caloporteur gazeux et des côtés de sortie des seconds dispositifs de soupape (22, 24) et du second échangeur de chaleur (32) à une conduite d'aspiration (11) commune évacuant le fluide caloporteur.

2. Système de refroidissement et/ou de chauffage (100) selon la revendication 1, pour lequel le circuit de pompe à chaleur (40') est en outre réalisé (vi) avec un ensemble de pompes à chaleur (40) qui est réalisé respectivement avec un ou plusieurs compresseurs (42), condensateurs (41) et/ou évaporateurs, (vii) avec l'ensemble de conduite (10) pour la liaison mécanique fluide commandée de composants du circuit de pompe à chaleur (40') et/ou pour le passage monté en parallèle et/ou en série de l'accumulateur de chaleur (50) avec le fluide caloporteur.

3. Procédé de fonctionnement pour un système de refroidissement et/ou de chauffage (100),
dans lequel le système de refroidissement et/ou de chauffage (100) est réalisé selon l'une quelconque des revendications précédentes et
dans lequel pour le procédé de fonctionnement :
- dans un premier mode de fonctionnement pour la charge de l'accumulateur de chaleur (50) avec de l'énergie thermique, l'accumulateur de chaleur (50) est traversé par le fluide caloporteur en étant monté en parallèle des échangeurs de chaleur (31, 32) et
- dans un second mode de fonctionnement pour la décharge d'énergie thermique de l'accumulateur de chaleur (50), l'accumulateur de chaleur (50) est traversé par le fluide caloporteur en étant monté en série par rapport aux échangeurs de chaleur (31, 32) et avec une interposition en série entre le premier échangeur de chaleur (31) et le second échangeur de chaleur (32).

4. Procédé de fonctionnement selon la revendication 3, pour lequel
- l'accumulateur de chaleur (50) fonctionne directement et/ou de manière intégrée de telle manière qu'une accumulation directe d'énergie thermique soit effectuée sur un côté utile du système de refroidissement et/ou de chauffage (100) et/ou
- le fluide caloporteur traverse dans le sens d'écoulement tout d'abord un ou plusieurs premiers échangeurs de chaleur (31), puis l'un ou plusieurs accumulateurs de chaleur (50) et ensuite l'un ou plusieurs échangeurs de chaleur (32).

5. Procédé de fonctionnement selon l'une quelconque des revendications 3 et 4, pour lequel l'accumulateur de chaleur (50) fonctionne directement et/ou de manière intégrée de telle manière que le fonctionnement du système de refroidissement et/ou de chauffage (100) soit effectué sans influence d'une couche de pression et/ou d'une couche de température, dans un processus d'évaporation et/ou processus de condensation sous-jacent et dans un ou dans plusieurs évaporateurs et/ou dans un ou dans plusieurs condensateurs (41) de l'ensemble de pompes à chaleur (40) sous-jacent.

6. Procédé de fonctionnement selon l'une quelconque des revendications 3 à 5, pour lequel l'accumulateur de chaleur (50) fonctionne pour l'accumulation d'énergie thermique sans ou le plus largement sans modification de température d'un fluide d'accumulateur sous-jacent.

7. Procédé de fonctionnement selon l'une quelconque des revendications 3 à 6,
- qui est réalisé pour le refroidissement et/ou le chauffage,
- pour lequel pour un refroidissement, un approvisionnement en froid est effectué par une évaporation d'un fluide caloporteur en tant que réfrigérant dans l'accumulateur de chaleur (50), dans lequel un fluide caloporteur déjà évaporé pour une utilisation du froid pour une nouvelle utilisation suivante est guidé d'un point de refroidissement (33, 34) à travers l'accumulateur de chaleur (50) et est condensé par dissipation thermique à un fluide d'accumulateur plus froid sous-jacent dans l'accumulateur de chaleur (50) et le fluide caloporteur condensé et liquide est évaporé pour une couche de pression identique ou pour une couche de pression plus basse, par exemple par détente de nouveau au niveau d'un point de refroidissement (33, 34) par absorption d'énergie thermique afin de le refroidir, et/ou
- pour lequel pour un chauffage, un approvisionnement en froid est effectué avec l'accumulateur de chaleur (50) à un niveau de température supérieur par le refroidissement et/ou la condensation d'un moyen de travail dans l'accumulateur de chaleur (50), dans lequel pour une utilisation de la chaleur, un fluide caloporteur est condensé à un point de chauffage (33, 34), puis après une détente partielle est guidé par l'accumulateur de chaleur (50) et est condensé par absorption de chaleur d'un fluide caloporteur plus chaud sous-jacent et le fluide caloporteur évaporé est condensé de nouveau pour la condensation au niveau d'un point de chauffage (33, 34) afin de le chauffer par dissipation d'énergie thermique.

8. Procédé de fonctionnement selon l'une quelconque des revendications 3 à 7, qui est réalisé, au moins partiellement, sans fonctionnement de composants d'installation et/ou par une circulation naturelle du fluide caloporteur.
